# EUROPEAN PATENT SPECIFICATION

(11) **EP 2 793 345 B1**
(45) Date of publication and mention of the grant of the patent: **02.11.2016**
(21) Application number: 12858275.6
(22) Date of filing: 07.09.2012
(51) Int. Cl.: H02J 3/38, H02J 7/35

(54) **ELECTRIC POWER SUPPLY SYSTEM**
STROMVERSORGUNGSSYSTEM
SYSTÈME D'ALIMENTATION ÉLECTRIQUE

(30) Priority: 15.12.2011 JP 2011275023
(43) Date of publication of application: 22.10.2014
(73) Proprietor: Panasonic Intellectual Property Management Co., Ltd., Osaka 540-6207 (JP)
(72) Inventor: KOSHIN, Hiroaki, Osaka-shi, Osaka 540-6207 (JP); TAMURA, Hideki, Osaka-shi, Osaka 540-6207 (JP)
(74) Representative: Appelt, Christian W.
(86) International application number: PCT/JP2012/072842
(87) International publication number: WO 2013/088798

(56) References cited:
- WO-A1-2008/041311
- JP-A- 2002 247 765
- JP-A- 2003 087 978
- JP-A- 2008 278 700
- JP-A- 2009 033 797
- JP-A- 2010 130 836

## Description

### TECHNICAL FIELD

The present invention relates to an electric power supply system configured to supply electric power from a power generator and/or a storage battery to a load in coordination with a power grid.

### BACKGROUND ART

There has been proposed an electric power supply system that includes a power converter configured to convert DC power of a power generator such as a solar battery into AC power. The conventional electric power supply system can supply electric power to a load(s) from not only a power grid of a commercial power supply, but also the power converter (for example, see JP H09-135577A). The system (dispersed electric power supply system) described in JP H09-135577A can switch its operation between a grid connecting operation in which the power converter (power conditioner) coordinates with the power grid and a grid independent operation in which the power converter is disconnected from the power grid.

In the grid connecting operation, the power converter converts DC power of the power generator (power source) into AC power by an inverter, and supplies the AC power to a load(s) (grid-connected load). In this operation, if the power converter cannot supply all the power required by the load, the shortfall-power can be compensated by the power grid. In a case of power outage or the like, the power converter is disconnected from the power grid to be switched into the grid independent operation, and to thereby convert generated power of the power generator into AC power by the inverter, and supply the AC power to a load(s) (grid-independent load).

Incidentally, in a case where the power generator is a solar battery and generates surplus power (i.e., the generated power by the solar battery is larger than the consumed power by the load), in general, the surplus power is sold to a power utility by the reverse flow to the power grid. However, in Japan for example, as for a power generator other than the solar battery (such as a fuel cell), surplus power is not allowed to flow back to the power grid even when the generator generates the surplus power. Combined system of a storage battery and a solar battery has also been proposed, but the electric power discharged by the storage battery is not allowed to flow back to the power grid, either.

In an electric power supply system which can generate electric power allowed to flow back to the power grid as well as electric power forbidden to flow back, in view of saving money on electricity, it is desirable that the electric power allowed to flow back is preferentially sold and the electric power forbidden to flow back is preferentially supplied to the load. However, general systems including both the solar battery and the storage battery are usually designed so that generated power of the solar battery is preferentially supplied to the load, and discharge power of the storage battery is supplied for compensating shortfall-power when the consumed power by the load is larger than the generated power of the solar battery. Therefore, in such systems, it is not possible to sell the electric power even when the solar battery generates sufficient electric power, unless the generated power of the solar battery is larger than the consumed power by the load. Therefore, such systems cannot effectively facilitate saving money on electricity.
Document JP 2010-130836 A discloses a power supply system including a commercial power supply, a solar power generation system, and a power storage battery. The power supply system is provided with a power switching unit. When detecting a reverse power flow or a voltage rise between the power switching unit and the commercial power supply, the power switching unit separates the commercial power supply from the system and stores surplus power supplied from the solar power generation system in the power storage battery. When detecting a power failure at the commercial power supply, the power switching unit separates the commercial power supply from the system and supplies power from the solar power generation system and the power storage battery to a load.

### SUMMARY OF INVENTION

The present invention has been achieved in view of the above circumstances, and an object thereof is to provide an electric power supply system which can preferentially sell the electricity allowed to flow back to the power grid and preferentially supply the load with the electric power forbidden to flow back to the power grid.

An electric power supply system of the invention includes a first power converter, a second power converter and a third power converter. The first power converter is connected to a first power generator configured to generate electric power allowed to flow back to a power grid, and is configured to carry out electric conversion of generated power of the first power generator. The
second power converter is connected to a storage battery, and is configured to charge and discharge the storage battery. The third power converter is connected to a second power generator configured to generate electric power forbidden to flow back to the power grid, and is configured to carry out electric conversion of generated power of the second power generator. The electric power supply system is configured to supply electric power to at least one load through a grid-connected feed line. The power grid is connected to an upstream end of the grid-connected feed line. The load is connected to a downstream end of the grid-connected feed line. The first to third power converters are connected to the grid-connected feed line in a manner that the first power converter is located at most upstream side of the grid-connected feed line. The electric power supply system further includes a first sensor. The first sensor is disposed along the grid-connected feed line at a position between a junction of the grid-connected feed line and the first power converter and a junction of the grid-connected feed line and one of the second and third power converters, located at more upstream side of the grid-connected feed line. The first sensor is configured to sense electric power flowing back to the power grid through the grid-connected feed line. The second power converter is configured to control charging and discharging of the storage battery so that the electric power flowing back to the power grid, sensed with the first sensor is kept zero. The third power converter is configured to control output power thereof with respect to the grid-connected feed line so that the electric power flowing back to the power grid, sensed with the first sensor is kept zero.

According to one aspect of the electric power supply system, the second and third power converters are connected to the grid-connected feed line in a manner that the second power converter is located at more upstream side of the grid-connected feed line. The electric power supply system further includes a second sensor. The second sensor is disposed along the grid-connected feed line at a position between a junction of the grid-connected feed line and the second power converter and a junction of the grid-connected feed line and the third power converter. The second sensor is configured to sense electric power flowing back to the power grid through the grid-connected feed line. The second power converter is connected to the first sensor, and is configured to
control the charging and discharging of the storage battery so that the electric power flowing back to the power grid, sensed with the first sensor is kept zero. The third power converter is connected to the second sensor, and is configured to control the output power thereof with respect to the grid-connected feed line so that the electric power flowing back to the power grid, sensed with the second sensor is kept zero.

According to another aspect of the electric power supply system, the above mentioned one of the second and third power converters, located at more upstream side of the grid-connected feed line is connected to the first sensor. The second and third power converters are configured to control the charging and discharging of the storage battery and to control the output power of the third power converter with respect to the grid-connected feed line while communicating with each other so that the electric power flowing back to the power grid, sensed with the first sensor is kept zero.

In the electric power supply system, preferably, the second power generator is formed of a cogeneration system configured to simultaneously generate electric and thermal energy.

In the electric power supply system, preferably, the first power generator is formed of a solar battery. The second power generator is formed of a fuel cell. The first power converter is configured to allow surplus power of generated power of the solar battery to flow back to the power grid.

Preferably, the electric power supply system further includes a disconnecting device and a failure detector. The disconnecting device is disposed along the grid-connected feed line at more upstream side of the grid-connected feed line compared to the junction of the grid-connected feed line and the first power converter. The failure detector is configured, when detecting a failure in the power grid, to turn off the disconnecting device and also to transmit a failure detection signal to one of the first to third power converters. The above mentioned one of the first to third power converters is configured to perform a constant voltage control so as to maintain an output voltage thereof with respect to the grid-connected feed line at a predetermined target value when receiving the failure detection signal. The other power converters are each configured to perform a current control so as to sense a
voltage of the grid-connected feed line to adjust an output current thereof based on the sensed voltage.

In the electric power supply system, preferably, the first to third power converters are each configured to switch between a grid connecting operation for supplying electric power to the load through the grid-connected feed line and a grid independent operation for supplying electric power to the load through a grid-independent feed line disconnected from the power grid. One of the first to third power converters is configured, in the grid independent operation, to perform a constant voltage control so as to maintain an output voltage thereof with respect to the grid-independent feed line at a predetermined target value. The other power converters are each configured, in the grid independent operation, to perform a current control so as to sense a voltage of the grid-independent feed line to adjust an output current thereof based on the sensed voltage.

In the electric power supply system, preferably, one of the first to third power converters is configured to switch between a grid connecting operation for supplying electric power to the load through the grid-connected feed line and a grid independent operation for supplying electric power to the load through a grid-independent feed line disconnected from the power grid. The other power converters are each connected to the grid-connected feed line and the grid-independent feed line via an external selector configured to switch connection destination of a corresponding converter between the grid-connected feed line and the grid-independent feed line. In the grid independent operation, the above mentioned one of the first to third power converters is configured to perform a constant voltage control so as to maintain an output voltage thereof with respect to the grid-independent feed line at a predetermined target value and also to switch the external selector to the grid-independent feed line side, and the other power converters are each configured to perform a current control so as to sense a voltage of the grid-independent feed line to adjust an output current thereof based on the sensed voltage.

In the electric power supply system, preferably, the at least one load includes two or more loads. The electric Dower supply system further includes load-breakers, a memory and a load selector. The load-breakers are disposed along respective power feed lines to the loads. The memory is configured to store priority orders of the loads. The load selector is configured to sequentially turn off the load-breakers in accordance with power supplied to the loads so that a load-breaker corresponding to a load given a lower priority is preferentially turned off.

Note that, the features "the first power generator is configured to generate electric power allowed to flow back to a power grid" and "the second power generator is configured to generate electric power forbidden to flow back to the power grid" are option in the invention, so long as that the first and second power generators are configured to generate electric power.

That is, the electric power supply system of the invention includes a first power converter, a second power converter and a third power converter. The first power converter is connected to a first power generator, and is configured to carry out electric conversion of generated power of the first power generator. The second power converter is connected to a storage battery, and is configured to charge and discharge the storage battery. The third power converter is connected to a second power generator, and is configured to carry out electric conversion of generated power of the second power generator. The electric power supply system is configured to supply electric power to at least one load through a grid-connected feed line. The power grid is connected to an upstream end of the grid-connected feed line, respectively. The load is connected to a downstream end of the grid-connected feed line. The first to third power converters are connected to the grid-connected feed line in a manner that the first power converter is located at most upstream side of the grid-connected feed line. The electric power supply system further includes a first sensor. The first sensor is disposed along the grid-connected feed line at a position between a junction of the grid-connected feed line and the first power converter and a junction of the grid-connected feed line and one of the second and third power converters, located at more upstream side of the grid-connected feed line. The first sensor is configured to sense electric power flowing back to the power grid through the grid-connected feed line. The second power converter is configured to control charging and discharging of the storage battery so that the electric power flowing back to the power grid, sensed with the first sensor is kept zero. The third power converter is configured to control output power thereof with respect to the grid-connected feed line so that the electric power flowing back to the power grid, sensed with the first sensor is kept zero. Preferably, the first power generator is formed of a solar battery, and the second power generator is formed of a fuel cell.

The invention has an advantage that the electric power allowed to flow back to the power grid can be preferentially sold, and the electric power forbidden to flow back can be preferentially supplied to the load.

### BRIEF DESCRIPTION OF DRAWINGS

FIG. 1 is a block diagram showing a configuration of an electric power supply system according to a first embodiment;
FIG. 2 is a diagram illustrating an operation of the electric power supply system according to the first embodiment;
FIGS. 3A to 3C are diagrams illustrating the operation of the electric power supply system according to the first embodiment;
FIG. 4 is a block diagram showing another configuration of an electric power supply system according to the first embodiment;
FIG. 5 is a circuit diagram showing a main part of the electric power supply system according to the first embodiment;
FIG. 6 is a block diagram showing a configuration of an electric power supply system according to a second embodiment;
FIG. 7 is a block diagram showing a configuration of an electric power supply system according to a third embodiment;
FIG. 8 is a block diagram showing another configuration of an electric power supply system according to the third embodiment; and
FIGS. 9A and 9B are block diagrams showing main parts of the electric power supply system according to the third embodiment.

### DESCRIPTION OF EMBODIMENTS

### (First Embodiment)

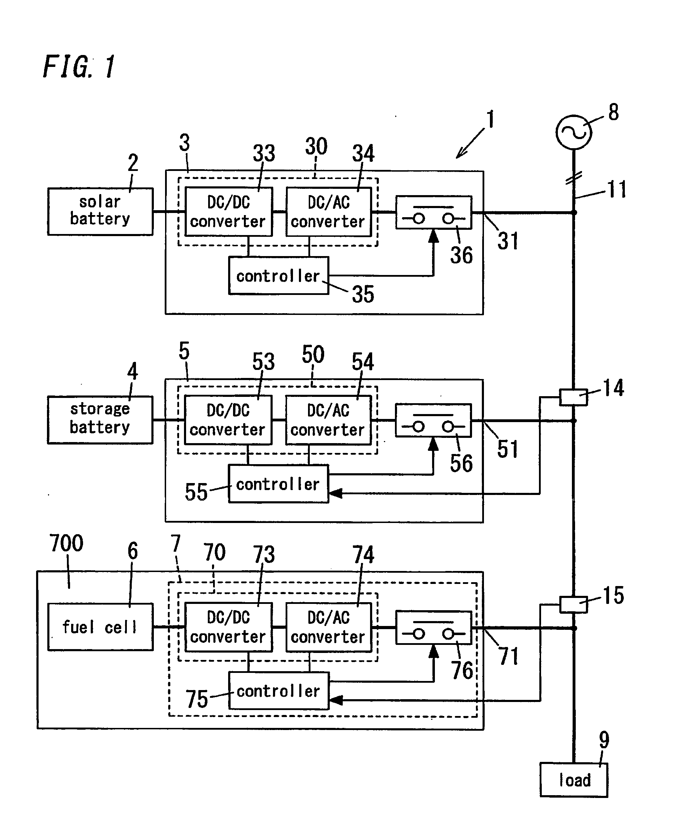

As shown in FIG. 1, an electric power supply system **1** of the present embodiment includes a solar battery **2,** a first power converter **3** connected to the solar battery **2,** a storage battery **4,** a second power converter **5** connected to the storage battery **4,** a fuel cell **6,** and a third power converter **7** connected to the fuel cell **6.** That is, the first power converter **3** is connected to the solar battery **2** as a first power generator, and the third power converter **7** is connected to the fuel cell **6** as a second power generator. Explanation of the embodiment is made with an example where a consumer facility to which the power supply system **1** is applied is a general detached house. However, the consumer facility to which the power supply system **1** is applied is not limited to this example, but may be each dwelling unit of an apartment building, a facility, an office, or the like. Examples of the storage battery **4** include a lead storage battery and a lithium-ion battery.

Each of the first to third power converters **3, 5** and **7** can perform a grid connecting operation for coordinating with a power grid **8** of a commercial power supply (a commercial power grid). The first power converter **3** has a connection output terminal **31** that functions as a power output terminal in the grid connecting operation. The second power converter **5** has a connection output terminal **51** that functions as a power output terminal in the grid connecting operation. The third power converter **7** has a connection output terminal **71** that functions as a power output terminal in the grid connecting operation. Detailed structures of the power converters will be discussed later.

The connection output terminals **31, 51** and **71** of the first to third power converters **3, 5** and **7** are each connected to a grid-connected feed line **11** to which the power grid 8 is connected. In other words, the connection output terminals **31, 51** and **71** of the first to third power converters **3, 5** and **7** are connected with each other via the grid-connected feed line **11.**

The fuel cell **6** of the second power generator is configured to reuse the generator exhaust heat, and thus forms a cogeneration system which can simultaneously generate electric and thermal energy. Note that, for example in Japan, generated power by the solar battery **2** of the first power generator is allowed to be sold to a power utility, but generated power by the fuel cell **6** of the second power generator is not allowed to be sold to the power utility.

The grid-connected feed line **11** is connected to a load(s) **9.** The load **9** of the embodiment is formed of an AC electric apparatus that is configured to operate by AC power supplied from a power converter or the power grid **8.** Examples of the load **9** include various electric apparatuses such as a lighting apparatus, a refrigerator, a television set, a medical apparatus, and a charger of a mobile phone. Note that the grid-connected feed line **11** is not necessarily to be directly connected to the load **9** of the electric apparatus, but may be connected to an outlet (not shown) to which a load **9** is detachably attached.

Described are structures and operations of the first to third power converters **3, 5** and **7** with reference to FIG. **1****.**

The first power converter **3** includes a DC/DC converter **33** connected to the solar battery **2,** a DC/AC converter **34** configured to convert DC power into AC power, a controller **35** configured to control each component, and a grid-connection side switch **36** formed of a relay. The DC/DC converter **33** has a terminal to which the DC/AC converter **34** is connected and which is arranged opposite side of the DC/DC converter **33** from the solar battery **2.** The DC/AC converter **34** has an AC output terminal, and the AC output terminal is connected to the connection output terminal **31** via the grid-connection side switch **36.**

The DC/DC converter 33 is configured to step-up DC power of the solar battery **2** to supply the stepped-up power to the DC/AC converter **34.** The DC/AC converter **34** is formed of a unidirectional converter (an inverter) configured to convert DC power of the DC/DC converter **33** into AC power synchronized with a voltage of the power grid 8 to supply the AC power to the connection output terminal **31.** That is, the DC/DC converter **33** and the DC/AC converter **34** constitute a converter circuit **30** that is configured to carry out power conversion of the solar battery **2** to supply the converted power to the grid-connected feed line **11.**

The controller **35** is mainly formed of a microcomputer, and is configured to execute programs stored in a memory (not shown) to achieve functions for the control of the converter circuit **30.** The controller **35** controls the DC/DC converter **33** so as to perform a maximum power point tracking (MPPT) control. The generating power of the solar battery **2** is not constant but varies according to the output voltage thereof. Therefore, it is preferable that the solar battery **2** operates at an optimum point (maximum power point) as maximum generating power.

Therefore, the first power converter **3** of the embodiment is configured to perform the MPPT control so that the operating point of the solar battery **2** follows the maximum power point so as to maximize the output of the solar battery **2** regardless of fluctuation in the output voltage and the output current of the solar battery **2** caused by variations in temperature of the solar battery **2,** solar radiation intensity, and the like. During the MPPT control, the first power converter **3** senses the voltage of the grid-connected feed line **11** to adjust the output current of the first power converter 3 based on the sensed voltage, i.e., performs a current control. The MPPT control is a well know technique, and detailed explanation thereof is omitted. In addition, the controller 35 is configured to switch on the grid-connection side switch **36** in the grid connecting operation, and also to switch off the grid-connection side switch **36** to thereby avoid unnecessarily operation and bad effect on outside (on the power grid **8**) when the power grid **8** is in failure such as power outage or when the first power converter **3** is in failure.

The first power converter **3** is configured, if the generated power of the solar battery **2** contains surplus power, to allow the surplus power to flow back to the power grid **8** because the generated power by the solar battery (the first power generator) **2** that is connected to the first power converter **3** is allowed to be sold to the power utility.

The second power converter **5** includes a DC/DC converter **53** connected to the storage battery **4,** a DC/AC converter **54** configured to convert DC power into AC power, a controller **55** configured to control each component, and a grid-connection side switch **56** formed of a relay. The DC/DC converter 53 has a terminal to which the DC/AC converter **54** is connected and which is arranged opposite side of the DC/DC converter **53** from the storage battery **4.** The DC/AC converter **54** has an AC output terminal, and the AC output terminal is connected to the connection output terminal **51** via the grid-connection side switch **56.**

The DC/DC converter **53** is formed of a bidirectional converter configured to step-up DC power of the storage battery **4** to supply the stepped-up power to the DC/AC converter **54** during discharging the storage battery **4,** and also to convert DC power of the DC/AC converter **54** into optimal voltage and current in accordance with condition of the storage battery **4** to supply the converted power to the storage battery **4** during charging the storage battery **4.** The DC/AC converter **54** is formed of a bidirectional converter configured to convert DC power of the DC/DC converter **53** into AC power synchronized with the voltage of the power grid 8 to supply the AC power to the connection output terminal **51** during discharging the storage battery **4,** and also to convert AC power supplied through the connection output terminal **51** into DC power to supply the DC power to the DC/DC converter 53 during charging the storage battery **4.**

That is, the DC/DC converter **53** and the DC/AC converter **54** constitute a charge-discharge circuit **50** that is configured to bidirectionally convert electric power between the storage battery **4** and the grid-connected feed line **11** so as to charge and discharge the storage battery **4.** Hereinafter, a mode of the charge-discharge circuit **50** when it converts the output power of the storage battery **4** into AC power to supply the AC power to the grid-connected feed line **11** will be called "discharge mode", and a mode of the charge-discharge circuit **50** when it converts electric power supplied through the grid-connected feed line **11** into DC power to supply the DC power to the storage battery **4** will be called "charge mode".

The controller **55** is mainly formed of a microcomputer, and is configured to execute programs stored in a memory (not shown) to achieve functions for the control of the charge-discharge circuit **50.** The controller **55** is configured so that, during discharging the storage battery **4,** the controller **55** sets a target value of the output current of the charge-discharge circuit **50** and controls the charge-discharge circuit **50** so as to conform the output current of the charge-discharge circuit **50** to the target value. During this control, the second power converter **5** senses the voltage of the grid-connected feed line **11** to adjust the output current of the second power converter **5** based on the sensed voltage, i.e., performs a current control. In addition, the controller **55** is configured to switch on the grid-connection side switch **56** in the grid connecting operation, and also to switch off the grid-connection side switch **56** to thereby avoid unnecessarily operation and bad effect on outside (on the power grid **8**) when the power grid **8** is in failure such as power outage or when the second power converter **5** is in failure.

The third power converter **7** includes a DC/DC converter **73** connected to the fuel cell **6,** a DC/AC converter **74** configured to convert DC power into AC power, a controller **75** configured to control each component, and a grid-connection side switch **76** formed of a relay. The DC/DC converter **73** has a terminal to which the DC/AC converter **74** is connected and which is arranged opposite side of the DC/DC converter **73** from the fuel cell **6.** The DC/AC converter **74** has an AC output terminal, and the AC output terminal is connected to the connection output terminal **71** via the grid-connection side switch **76.**

The DC/DC converter **73** is configured to step-up DC power of the fuel cell **6** to supply the stepped-up power to the DC/AC converter **74.** The DC/AC converter **74** is formed of a unidirectional converter (an inverter) configured to convert DC power of the DC/DC converter **73** into AC power synchronized with the voltage of the power grid **8** to supply the AC power to the connection output terminal **71.** That is, the DC/DC converter **73** and the DC/AC converter **74** constitute a converter circuit **70** that is configured to carry out power conversion of the fuel cell **6** to supply the converted power to the grid-connected feed line **11.** The third power converter **7** is integrated with the fuel cell **6** to form a fuel cell system **700** in the example of FIG. 1, but the third power converter **7** and the fuel cell **6** may be separate components.

The controller **75** is mainly formed of a microcomputer, and is configured to execute programs stored in a memory (not shown) to achieve functions for the control of the converter circuit **70.** The controller **75** is configured so that the controller **75** sets a target value of the output current of the converter circuit **70** and controls the output current of the converter circuit **70** so as to conform the output current of the converter circuit **70** to the target value. During this control, the third power converter **7** senses the voltage of the grid-connected feed line **11** to adjust the output current of the third power converter **7** based on the sensed voltage, i.e., performs a current control. Note that the controller **75** may be configured to control operations of accessories (such as adjustment pumps, valves and blowers of water, gas, air and the like) for the fuel cell **6** by supplying suitable operation instruction to these accessories, in addition to the converter circuit **70.** In addition, the controller **75** is configured to switch on the grid-connection side switch **76** in the grid connecting operation, and to switch off the grid-connection side switch **76** to thereby avoid unnecessarily operation and bad effect on outside (on the power grid **8**) when the power grid 8 is in failure such as power outage or when the third power converter **7** is in failure.

According to the above-described configurations, the load **9** can be supplied with electric power from at least one of the first power converter **3,** the second power converter **5,** the third power converter **7,** and the power grid **8** through the grid-connected feed line **11** when the power grid **8** is in normal (i.e., in the grid connecting operation).

In the electric power supply system **1** of the embodiment, the power grid 8 and the load **9** are connected to the upstream end and the downstream end of the grid-connected feed line **11,** respectively, and the first to third power converters **3, 5** and **7** are individually connected to the grid-connected feed line **11** between the upstream end and the downstream end of the grid-connected feed line **11.** As shown in FIG. **1****,** the first to third power converters **3, 5** and **7** are connected to the grid-connected feed line **11** in the order of the first power converter **3,** the second power converter **5** and the third power converter **7** from the upstream end side of the grid-connected feed line **11.**

In addition, in order to detect power flowing through the grid-connected feed line **11,** the electric power supply system **1** of the embodiment further includes a first sensor **14** and a second sensor **15** which are disposed along the grid-connected feed line **11.** In the embodiment, the first sensor **14** is connected to the second power converter **5,** and the second sensor **15** is connected to the third power converter **7.** The first sensor **14** is formed of a current sensor, and is disposed at more upstream side of the grid-connected feed line **11** compared to a junction of the grid-connected feed line **11** and the second power converter **5** so as to sense a current at a position where the first sensor **14** is disposed. The second sensor **15** is formed of a current sensor, and is disposed at more upstream side of the grid-connected feed line **11** compared to a junction of the grid-connected feed line **11** and the third power converter **7** so as to sense a current at a position where the second sensor **15** is disposed. That is, the first sensor **14** is disposed along the grid-connected feed line **11** at a position between the first power converter **3** and the second power converter **5,** and the second sensor **15** is disposed along the grid-connected feed line **11** at a position between the second power converter **5** and the third power converter **7.** In other words, the first sensor **14** is disposed at a position between the junction of the grid-connected feed line **11** and the first power converter **3** and the junction (the junction of the grid-connected feed line **11** and the second power converter **5,** in the embodiment) of the grid-connected feed line **11** and one of the second and third power converters **3** and **5,** located at more upstream side of the grid-connected feed line **11.**

The controller **55** of the second power converter **5** is configured to monitor a waveform of the voltage on the grid-connected feed line **11.** The controller **55** is configured to judge a phase difference between the monitored voltage waveform and a current waveform sensed with the first sensor **14** to thereby determine a direction of power flowing at the position where the first sensor **14** is disposed (determine whether it is a reverse flow or not). The controller **75** of the third power converter **7** is configured to monitor a waveform of the voltage on the grid-connected feed line **11.** The controller **75** is configured to judge a phase difference between the monitored voltage waveform and a current waveform sensed with the second sensor **15** to thereby determine a direction of power flowing at the position where the second sensor **15** is disposed (determine whether it is a reverse flow or not). With this configuration, the controller **55** senses the direction of power flowing through the grid-connected feed line **11** between the first power converter **3** and the second power converter **5,** and the controller **75** senses the direction of power flowing through the grid-connected feed line **11** between the second power converter **5** and the third power converter **7.**

The controller **55** is configured to determine the target value and control the charge-discharge circuit **50** so that the second power converter **5** outputs as large power as possible to the grid-connected feed line **11** while the power flowing back to the power grid through the grid-connected feed line **11** is kept zero at the position where the first sensor **14** is disposed. In other words, the second power converter **5,** basically, increases the output power thereof with respect to the grid-connected feed line **11** as much as possible to the extent that. the output power is not flowed back to the power grid through the grid-connected feed line **11.** Then, the controller **55** is also configured to monitor a remaining battery level of the storage battery **4,** and to switch the charge-discharge circuit **50** into the charge mode so as to start charging the storage battery **4** when the remaining battery level becomes less than a predetermined charge-threshold. The controller **55** may be configured, if detecting a presence of the reverse flow to the power grid at the position where the first sensor **14** is disposed under a condition where the storage battery **4** has a chargeable capacity, to switch the charge-discharge circuit **50** into the charge mode.

The controller **75** is configured to determine the target value and control the converter circuit **70** so that the third power converter **7** outputs as large power as possible to the grid-connected feed line **11** while the power flowing back to the power grid through the grid-connected feed line **11** is kept zero at the position where the second sensor **15** is disposed. In other words, the third power converter **7,** basically, increases the output power thereof with respect to the grid-connected feed line 11 as much as possible to the extent that the output power is not flowed back to the power grid through the grid-connected feed line **11.** As described above, the controller **55** of the second power converter **5** is configured to control charging and discharging of the storage battery **4** so that the power flowing back to the power grid, sensed with the first sensor **14** is kept zero. Therefore, the controller **75** of the third power converter **7** is to control the output power of the second power generator (the fuel cell **6**) with respect to the grid-connected feed line **11** so that the power flowing back to the power grid sensed with first sensor **14** is kept zero. The controller **75** may also be configured to control the accessories. The controller **75** may be configured to switch off the grid-connection side switch **76** if detecting a presence of the reverse flow to the power grid at the position where the second sensor **15** is disposed.

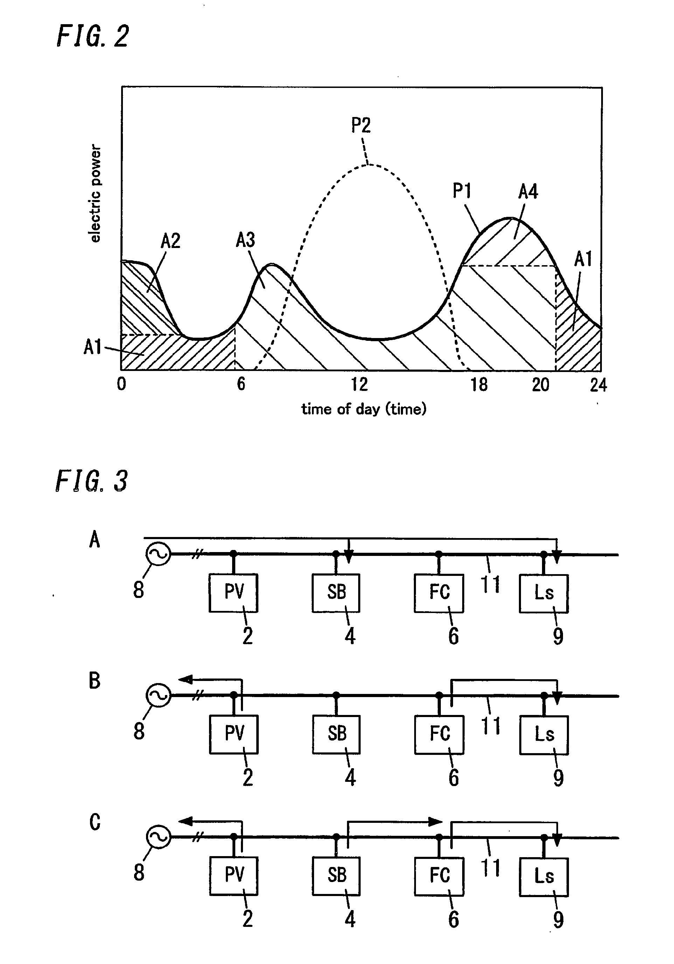

An operation of the electric power supply system **1** according to the embodiment is now described with reference to FIGS. 2 and 3 that illustrate an example of an operation pattern of the electric power supply system **1.** In FIG. 2, the horizontal axis indicates the time of day (0:00 to 24:00), and the vertical axis indicates amount of electric power. Note that "PI" indicates a "consumed power", i.e., total power consumed in a consumer facility, and "P2" indicates a "sold-power", i.e., electric power sold to the power utility. Note that FIGS. 3A to 3C omit illustration of the first to third power converters **3, 5** and **7,** and the solar battery (photovoltaic cell) 2, the storage battery **4,** the fuel cell 6, and the load(s) **9** are represented by the abbreviations "PV", "SB", "FC", and "Ls", respectively.

In this example, in a period from 20^{:}00 to 6:00, the second and third power converters **5** and **7** stop outputting electric power to the grid-connected feed line **11,** and thereby the consumed power by the load **9** is entirely covered by a purchased power (indicated by a reference "Al" in FIG. 2) from the power grid **8** because the consumed power by the load **9** is comparatively small. Additionally, in a midnight time (in a period from 0:00 to 3:00) in which electricity rate is low, the second power converter 5 charges the storage battery **4** by a purchased power (indicated by a reference "A2" in FIG. 2) from the power grid **8.** That is, in the period from 20:00 to 6:00, electric power is supplied from the power grid **8** to the load **9** and the storage battery **4** through the grid-connected feed line **11,** as shown in FIG. 3A.

In a period from 6:00 to 20:00, the third power converter **7** is activated so as to supply the grid-connected feed line **11** with generated power by the fuel cell **6.** In this case, the third power converter **7** limits its own output power so that the output power is not flowed back to the power grid through the grid-connected feed line **11.** Therefore, in a case where the consumed power by the load **9** is equal to or less than the generated power of the fuel cell **6** in this period, the output power (indicated by a reference "A3" in FIG. 2) of the third power converter **7** varies up to a ceiling of the consumed power by the load **9** so as to follow the consumed power by the load **9.**

In the period from 6:00 to 20:00, generated power of the solar battery **2** is preferentially flowed back to the power grid **8** as the sold-power P2. In the example of FIG. 2, required power (i.e., consumed power by the load **9**) in a downstream side of the grid-connected feed line **11** with respect to the junction of the grid-connected feed line **11** and the first power converter **3** can be covered by the sum of output power of the fuel cell **6** and the storage battery **4.** Therefore, all the generated power by the solar battery **2** can be regarded as "surplus power", and the first power converter **3** allows the surplus power to flow back to the power grid. That is, in a case where the consumed power by the load **9** is equal to or less than the generated power by the fuel cell **6** in the period from 6:00 to 20:00, the output power of the fuel cell **6** is supplied to the load **9** through the grid-connected feed line **11,** and the generated power by the solar battery **2** is flowed back to the power grid **8,** as shown in FIG. 3B.

In a case where the consumed power by the load **9** is greater than the generated power of the fuel cell **6** in the period from 6:00 to 20:00, the second power converter **5** is activated so as to supply the stored energy in the storage battery **4** to the grid-connected feed line **11.** In this case, the second power converter 5 limits its own output power so that the output power is not flowed back to the power grid through the grid-connected feed line **11.** Therefore, shortfall power, which is a difference between the consumed power by the load **9** and the output power of the third power converter **7,** is compensated by discharged power (indicated by a reference "A4" in FIG. 2) supplied from the second power converter **5** to the grid-connected feed line **11.** That is, in a case where the consumed power by the load **9** is larger than the generated power by the fuel cell **6** in the period from 6:00 to 20:00, electric power is supplied from the fuel cell **6** and the storage battery **4** to the load **9** through the grid-connected feed line **11,** and the generated power by the solar battery **2** is flowed back to the power grid **8,** as shown in FIG. 3C.

In a case where the consumed power by the load **9** is larger than the sum of the generated power by the fuel cell **6** and the discharge power by the storage battery **4** as well as the solar battery **2** can generate sufficient electric power, the first power converter **3** supplies electric power from the solar battery **2** to the load **9** so as to compensate the shortfall power. If the consumed power by the load **9** is smaller than the sum of the generated power by the fuel cell **6,** the discharge power by the storage battery **4** and the generated power by the solar battery **2,** namely, if there remains surplus power in the solar battery **2,** the first power converter **3** allows the surplus power to flow back to the power grid **8.** On the other hand, if the consumed power by the load **9** is greater than the sum of the generated power by the fuel cell **6,** the discharge power by the storage battery **4** and the generated power by the solar battery **2,** shortfall power is covered by a purchased power from the power grid **8.**

The above described operation can be achieved by providing appropriate timers (not shown) in the second power converter **5** and the third power converter **7,** respectively and appropriately setting behaviors of the controllers **35, 55** and **75.**

For example, at a predetermined fourth time (20:00 in the example of FIG. 2), the controllers **35, 55** and **75** of the first to third power converters **3, 5** and **7** switch off the grid-connection side switches **36, 56** and **76,** respectively to stop outputting electric power to the grid-connected feed line **11.** At a predetermined first time (0:00 in this example), the controller **55** of the second power converter **5** switches on the grid-connection side switch **56** and also operates the charge-discharge circuit **50** in the charge mode, to thereby start charging the storage battery **4** by the purchased power from the power grid **8.** Then, the second power converter **5** switches off the grid-connection side switch **56** to stop charging the storage battery **4** at a predetermined second time (3:00 in this example) or at a time when the remaining battery level of the storage battery **4** exceeds a predetermined upper limit (i.e., when the storage battery **4** is fully charged). At a predetermined third time (6:00 in this example), the controller **75** of the third power converter **7** switches on the grid-connection side switch **76** to start supplying electric power to the grid-connected feed line 11. With this operation, the consumed power by the load **9** is covered by the purchased power from the power grid **8** in a period from the fourth time to the third time (i.e., 20:00 to 6:00).

In a period from the third time to the fourth time (i.e., 6:00 to 20:00), the controller **75** of the third power converter **7** controls the operation of the converter circuit **70** and ON/OFF of the grid-connection side switch **76** so that the third power converter **7** supplies as large power as possible to the grid-connected feed line **11** to the extent that the reverse power flow sensed with the second sensor **15** is kept zero. In this period (6:00 to 20:00), the controller **55** of the second power converter **5** controls the operation of the charge-discharge circuit **50** and ON/OFF of the grid-connection side switch **56** so that the second power converter **5** supplies as large power as possible to the grid-connected feed line **11** to the extent that the reverse power flow sensed with the first sensor **14** is kept zero. Here, if the consumed power by the load **9** decreases rapidly under a condition where the third power converter **7** supplies electric power, a reverse flow from the third power converter **7** to the power grid may generate. When detecting a presence of the reverse flow through the second sensor **15,** the controller **75** of the third power converter **7** controls the converter circuit **70** so as to decrease the output current of the converter circuit **70** (or may switch off the grid-connection side switch **76**). In the case where the consumed power by the load **9** decreases rapidly, even if the third power converter **7** attempts to prevent the reverse flow at the position where the second sensor **15** is provided, a reverse flow may generate at the position where the first sensor **14** is provided. If the second power converter **5** detects a presence of the reverse flow to the power grid through the first sensor **14** under a condition where the second power converter **5** outputs electric power, the second power converter **5** controls the charge-discharge circuit **50** so as to decrease its own output power (or switches it into the charge mode). In this period (6:00 to 20:00), the controller **35** of the first power converter **3** senses the voltage of the grid-connected feed line **11,** and controls the operation of the converter circuit **30** and ON/OFF of the grid-connection side switch **36** so that the output power thereof is flowed back to the power grid **8.**

In short, in a first period (0:00 to 3:00 in the example of FIG. 2), the first power converter **3** is disconnected from the grid-connected feed line **11**; the second power converter **5** operates in the charge mode; and the third power converter **7** is disconnected from the grid-connected feed line **11.**

In a second period (3:00 to 6:00 in the example of FIG. 2), the first to third power converters **3, 5** and **7** are disconnected from the grid-connected feed line **11.**

In a third period (6:00 to 20:00 in the example of FIG. 2), the controller 75 of the third power converter **7** controls the operation of the converter circuit **70** and ON/OFF of the grid-connection side switch **76** so that the third power converter **7** supplies as large power as possible to the grid-connected feed line **11** to the extent that the second sensor **15** detects no reverse power flow. The controller **55** of the second power converter **5** controls the operation of the charge-discharge circuit **50** and ON/OFF of the grid-connection side switch **56** so that the second power converter **5** supplies as large power as possible to the grid-connected feed line **11** to the extent that the first sensor **14** detects no reverse power flow. The controller **35** of the first power converter **3** senses the voltage of the grid-connected feed line **11,** and controls the operation of the converter circuit **30** and ON/OFF of the grid-connection side switch **36** so that the output power thereof is flowed back to the power grid **8.**

In a fourth period (20:00 to 0:00 in the example of FIG. 2), the first to third power converters **3, 5** and **7** are disconnected from the grid-connected feed line **11.**

According to the above-described electric power supply system **1** of the embodiment, outputs of the second and third power converters **5** and **7,** which are located at downstream side of the grid-connected feed line **11,** are prevented from flowing back to the power grid through the grid-connected feed line **11,** and as a result supply their electric power preferentially to the load **9.** That is, consumed power by the load **9** in the consumer facility is preferentially covered by the output power of the storage battery **4** and the fuel cell **6** which are connected to the second and third power converters **5** and **7,** respectively. Therefore, the first power converter **3** allows the generated power of the solar battery **2** to flow back to the power grid **8,** thereby selling the generated power preferentially. When the consumed power by the load **9** is larger than the sum of the generated power by the fuel cell **6** and the discharge power by the storage battery **4,** the first power converter **3** can supply the generated power by the solar battery **2** to the load **9** so as to compensate for the shortfall power.

In the embodiment, the fuel cell **6** that forms a cogeneration system configured to generate electric and thermal energy is used for the second power generator connected to the third power converter **7.** Since the third power converter **7** preferentially supplies electric power to the load **9** in the consumer facility, the present system can achieve efficient supply of not only the electric
energy but the thermal energy to the consumer facility. In addition, since the generated power by the solar battery **2** (which is allowed to be sold) is preferentially sold to the utility, the present system can reduce utility costs and CO₂ emission.

According to the present embodiment, in the case where the generated power by the fuel cell **6** is smaller than the consumed power by the load **9,** the second power converter **5** can complement the shortage by discharging the stored energy in the storage battery **4.** Therefore, the system can reduce the electric power (purchased power) supplied from the power grid **8.** In particular, according to the operation pattern of FIG. **2****,** the second power converter **5** charges the storage battery **4** by the purchased power from the power grid **8** in the midnight time (0:00 to 3:00) in which electricity rate is low. Therefore, it is possible to further reduce the utility costs.

According to the above-described configuration, even when the solar battery **2** cannot generate sufficient power due to such as bad weather or midnight time, the consumed power by the load **9** can be covered by the output power of the fuel cell **6** and the discharge power by the storage battery **4** which has been charged in advance in the midnight time in which electricity rate is low, as described above. Thus, it is possible to reduce the electric power (purchased power) supplied from the power grid 8 and to reduce the utility costs.

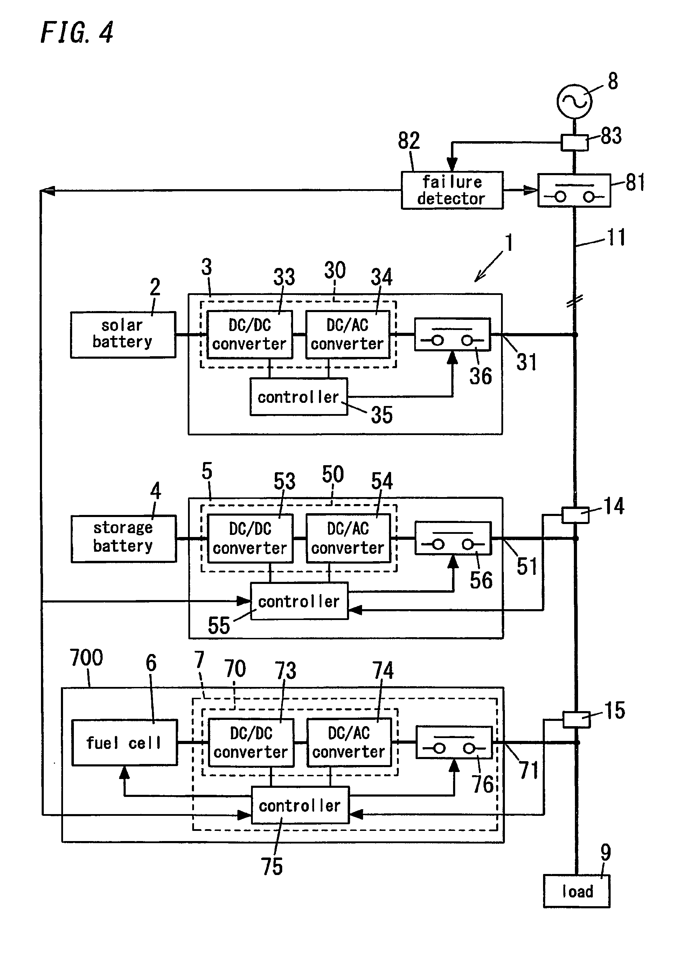

As a variation of the embodiment, the electric power supply system **1** may further include a disconnecting device **81** disposed along the grid-connected feed line **11** and a failure detector **82** configured to detect a presence/absence of failure in the power grid 8 such as power outage, as shown in FIG. 4. The disconnecting device **81** is disposed at more upstream side of the grid-connected feed line **11** compared to the junction of the grid-connected feed line **11** and the first power converter **3.** The electric power supply system **1** of this variation further includes a voltage sensor **83** disposed at more upstream side of the grid-connected feed line **11** compared to the disconnecting device **81.** The failure detector **82** of this variation is configured to receive an output from the voltage sensor **83** to detect a presence/absence of failure in the power grid **8** such as power outage. When detecting a failure of the power grid 8, the failure detector **82** controls the disconnecting device **81** so as to disconnect the power grid **8** and also transmits a failure detection signal to one of the first to third power converters **3, 5** and **7** (in the example of FIG. 4, to the second or third power converter **5, 7**).

The power converter that receives the failure detection signal (in this example, the second power converter **5**) switches the operation mode of its own controller **55** so that the controller 55 performs the constant voltage control so as to maintain the output voltage thereof with respect to the grid-connected feed line **11** at a predetermined target value. That is, the second power converter **5** is configured to, in normal, perform the current control so as to sense the voltage of the grid-connected feed line **11** to adjust the output current thereof based on the sensed voltage, and is also configured to be switched into the constant voltage control when receiving the failure detection signal from the failure detector **82.** Note that the target value for the constant voltage control may be variable.

The other power converters (in this example, the first and third power converters **3** and **7**) continue, even when the power grid **8** is in failure, the current control so as to sense the voltage of the grid-connected feed line **11** to adjust the output current thereof based on the sensed voltage. It is notable that, if there is no voltage on the grid-connected feed line **11** as a reference, the first and third power converters **3** and **7** cannot continue the current control. However, in this example, the grid-connected feed line **11** is applied with a voltage from the second power converter **5.** Therefore, the first and third power converters **3** and **7** can continue supplying electric power to the load 9 under the current control with the voltage applied by the second power converter **5** regarded as a "pseudo" grid voltage (the reference voltage), even when the power grid **8** is disconnected from the grid-connected feed line **11.**

Regarding the priority of generated power among the first to third power converters **3, 5** and **7** when the power grid **8** is in failure, the generated power by the solar battery **2** is preferentially used compared to the generated power by the fuel cell **6.** That is, the first power converter **3** performs the MPPT control so as to maximize the generated power by the solar battery **2,** and the third power converter **7** operates so as to compensate the shortfall power, which is a difference between the consumed power by the load **9** and the generated power by the solar battery **2,** by the generated power of the fuel cell **6.** In a case where the sum of the generated power by the solar battery **2** and the generated power by the fuel cell **6** is larger than the consumed power by the load **9,** the second power converter **5** charges the storage battery **4** by the surplus power. In a case where the sum of the generated power is smaller than the consumed power by the load **9,** the second power converter **5** discharges the storage battery **4** so as to compensate the shortfall-power.

According to this configuration, one of the first to third power converters **3, 5** and **7** is switched into the constant voltage control in response to a failure detection signal when the power grid **8** is in failure such as power outage, and therefore the other power converters can continue operating in the current control. Thus, even when the power grid **8** is in failure, the load **9** can receive not only the discharge power of the storage battery **4** but the generated power by the solar battery **2** and the generated power by the fuel cell **6.** As a result, electric power can be stably supplied to the load **9.** In addition, fuel consumption in the fuel cell **6** can be reduced since the generated power by the solar battery **2** is used preferentially.

It is preferable that the power converter configured to be switched into the constant voltage control in response to the failure detection signal when the power grid **8** is in failure is selected from the second and third power converters **5** and **7** of which output voltages are stable compared to that of the first power converter **3.** In other words, the above mentioned "one of the first to third power converters" is either the second power converter **5** or the third power converter **7.** That is, the second and third power converters **5** and **7** can stably supply a voltage as a reference voltage for the current control by other power converters without stopping their outputs like the first power converter **3** that possibly stops its output depending on an external environment (amount of solar radiation). The second power converter **5** is further advantageous, because, when the sum of the generated power by the solar battery **2** and the generated power by the fuel cell **6** is larger than the consumed power by the load **9,** the second converter can charge the storage battery **4** by the surplus power for the usage of future power shortage. That is, the above-described
"one of the first to third power converters" is, preferably, the second power converter **5** that is connected to the storage battery **4.**

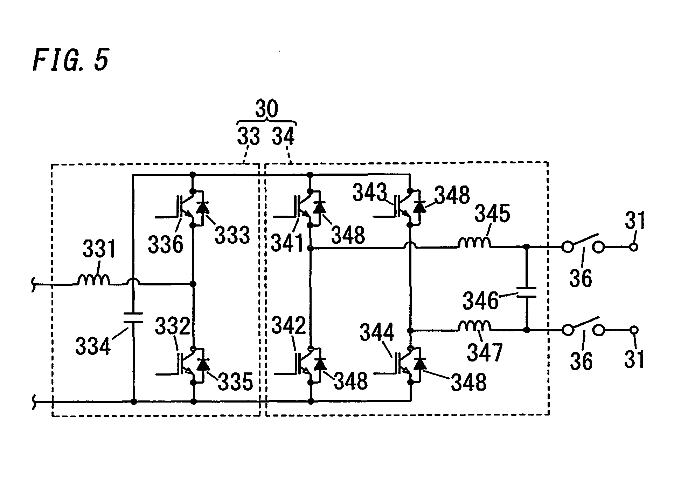

Described is specific structures of the first to third power converters **3, 5** and **7** with reference to FIG. **5.** FIG. 5 illustrates a circuit construction of the DC/DC converter **33** and the DC/AC converter **34** of the first power converter **3,** and each of the second and third power converters **5** and **7** may be configured like this circuit construction.

The DC/DC converter **33** is formed of a boost chopper circuit which includes: a series circuit, of an inductor **331** and a switching device **332,** connected to the solar battery **2;** and a series circuit of a diode 333 and a capacitor **334.** The circuit of the inductor **331** and the switching device **332** is connected to the solar battery **2** so that the inductor **331** is connected to a positive electrode side of the solar battery **2** and the switching device **332** is connected to a negative electrode side of the solar battery **2.** In the circuit of the diode **333** and the capacitor **334,** an anode of the diode **333** is connected to a junction of the inductor **331** and the switching device **332;** and a terminal of the capacitor **334** that is opposite side thereof from the diode **333** is connected to a junction of the negative electrode side of the solar battery **2** and the switching device **332.** The switching device **332** of the embodiment is formed of an insulated gate bipolar transistor (IGBT), and a diode **335** is connected in inverse-parallel with the switching device **332.** A switching device for charging, **336,** formed of an IGBT is connected in parallel with the diode **333.**

When the controller **35** controls so as to turn on and off the switching device **332** at a high frequency under a condition where the DC/DC converter **33** is supplied with electric power from the solar battery **2,** the DC/DC converter **33** generates a stepped-up DC voltage across the capacitor **334.** Note that, for charging the storage battery **4** (in the charge mode), the DC/DC converter **53** of the second power converter **5** steps down a voltage supplied from the DC/AC converter **54** to charge the storage battery **4** by the stepped-down DC voltage, by keeping its own switching device **332** turned off and controlling so as to turn on and off its own switching device for charging, **336,** at a high frequency.

The DC/AC converter **34** is formed of a full-bridge inverter circuit in which four switching devices **341** to **344** are connected across an output terminal of the DC/DC converter **33** (i.e., connected across the capacitor **334**). The DC/AC converter **34** includes an LC filter which is formed of a series circuit of an inductor **345,** a capacitor **346** and an inductor **347** and which is connected between a junction of the switching devices **341** and **342** and a junction of the switching devices **343** and **344.** Each of the switching devices **341** to **344** of the embodiment is formed of an IGBT, and respective diodes **348** are connected in inverse-parallel with the switching devices **341** to **344.**

When the controller **35** controls so as to turn on and off the switching devices **341** to **344** under a condition where the DC/AC converter **34** is supplied with electric power from the DC/DC converter **33,** the DC/AC converter **34** generates an AC voltage across the capacitor **346.** An output terminal of the DC/AC converter **34** (i.e., both ends of the capacitor **346**) is connected to the connection output terminal **31** via the grid-connection side switch **36** of double pole switch. Note that, for charging the storage battery **4** (in the charge mode), the DC/AC converter **54** of the second power converter **5** supplies a DC voltage to the DC/DC converter **53** by the controller **55** controlling so as to turn on and off its own switching devices **341** to **344.** Note that the converter turns on and off the switching devices **341** to **344** in accordance with a PWM (on-off) pattern having an opposite phase to that in a case of outputting the voltage of a DC side (storage battery **4** side) to a grid side (grid-connected feed line **11** side), and it is thereby possible to carry out power conversion from the grid-side to the DC side power (to charge).

In the above-described embodiment, each of the first to third power converters **3, 5** and **7** includes a single power converter, but is not limited tao this. For example, in the system, each of the first to third power converters **3, 5** and **7** may be two or more converters. In other words, the electric power supply system **1** includes, preferably, at least one first power converter **3,** at least one second power converter **5,** and at least one third power converter **7.**

### (Second Embodiment)

An electric power supply system **1** of the present embodiment differs from the electric power supply system **1** of the first embodiment in that a second power converter **5** and a third power converter **7** are configured to communicate with each other. Like kind elements are assigned the same reference numerals as depicted in the first embodiment and explanation is omitted as appropriate.

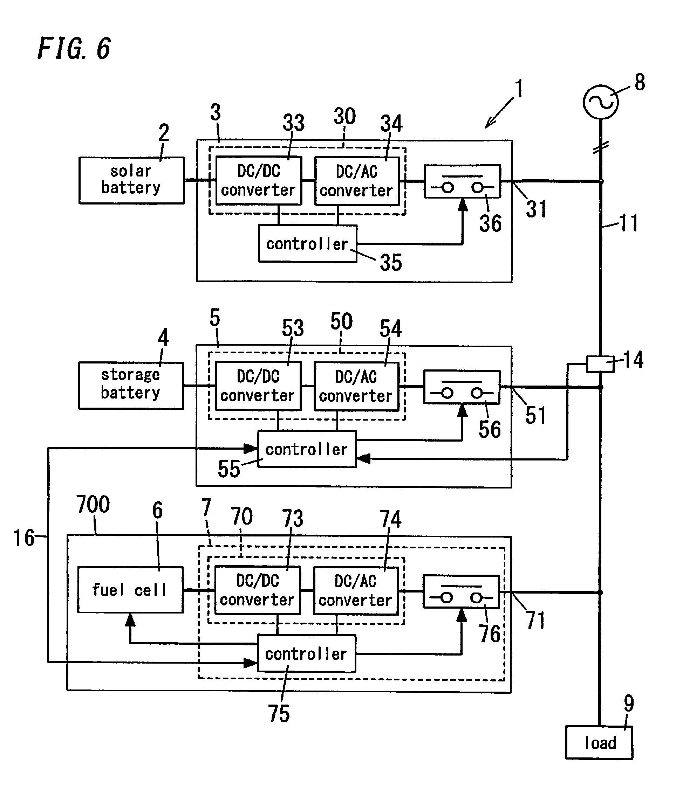

As shown in FIG. **6****,** in the embodiment, the second power converter 5 and the third power converter **7** are connected with each other by a communication line **16,** and thereby a controller **55** of the second power converter **5** and a controller **75** of the third power converter **7** are configured to communicate with each other through the communication line **16.** Note that the communication between the second power converter **5** and the third power converter **7** is not limited to a wire-communication, but may be a wireless-communication. Alternatively, the second power converter **5** and the third power converter **7** may be configured to communicate with each other using the grid-connected feed line **11** as a communication line.

The second power converter **5** and the third power converter **7** are each configured to adjust its own output power with respect to the grid-connected feed line **11** (the second power converter **5** also adjust input power from the grid-connected feed line **11** when a storage battery **4** is charged) according to the communication between the controllers **55** and **75.** In the embodiment, the second sensor **15** (see FIG. 1) is omitted, and the controller **75** of the third power converter **7** is configured to set a target value so that power flowing back to the power grid through the grid-connected feed line **11** is kept zero at a position where a first sensor **14** is disposed.

That is, the controllers **55** and **75** are configured to determine upper limits of output power of the second power converter 5 and output power of the third power converter **7** with respect to the grid-connected feed line **11** so as to increase the output power of them with respect to the grid-connected feed line **11** as much as possible while the power flowing back to the power grid through the grid-connected feed line **11** is kept zero at the position where the first sensor **14** is disposed. The controllers **55** and **75** may be configured to determine the upper limits of the output power of the second and the third power converters **5** and **7** with respect to the grid-connected feed line **11** so that the sum of the output power of the second and the third power converters 5 and **7** with respect to the grid-connected feed line **11** is kept less than consumed power by a load **9.**

For this purpose, the controllers **55** and **75** are configured to determine the upper limit of the output power of the third power converter **7** by adding electric power for charging the storage battery **4** by the second power converter **5** to the consumed power by the load **9** when sensing a remaining battery level of the storage battery **4** with the storage battery **4** not fully charged. That is, if the output power of the third power converter **7** with respect to the grid-connected feed line **11** exceeds the consumed power by the load **9,** a surplus power of the output power may be flowed back to the power grid through the grid-connected feed line **11.** In this case, by using the surplus power flowed back from the third power converter **7** for charging the storage battery **4** by the second power converter **5,** it is possible to prevent the reverse flow to the power grid through the grid-connected feed line **11** at the position where the first sensor **14** is disposed. That is, in the embodiment, the output power of the third power converter **7** is not completely forbidden to flow back to the power grid through the grid-connected feed line **11,** and is allowed to flow back when it is used for charging the storage battery **4.**

An operation of the electric power supply system **1** according to the embodiment is described according to an example of an operation pattern of the electric power supply system **1.** Note that basic operation of this example is similar to that of the operation pattern illustrated in the first embodiment with reference to FIGS. 2 and 3.

This example differs from the example of the first embodiment in that output power of the third power converter **7** can be kept constant when the consumed power by the load **9** temporarily decreases with the storage battery **4** not fully charged, by using the decreased amount in the consumed power for charging the storage battery **4** by the second power converter **5.** That is, fluctuation in the consumed power by the load **9** can be covered in the system without change in the output power of the third power converter **7,** by using the surplus power of the fuel cell **6** caused by the fluctuation for charging the storage battery **4** by the second power converter **5.**

Under a condition where the system operates according to an operation pattern in which the storage battery **4** is charged by electric power from a power grid **8** in a predetermined time period (for example, midnight time) every day, and when the remaining battery level of the storage battery **4** is sufficiently high, the system may use the discharge power of the storage battery **4** preferentially. For example, the consumed power by the load **9** can be covered, by advancing a timing for causing the third power converter **7** stopping the power generation of the fuel cell **6** in a time of day and by causing the second power converter **5** to output the discharge power of the storage battery **4** to the grid-connected feed line **11.**

According to the electric power supply system **1** of the embodiment described above, the storage battery **4** and the fuel cell **6** are used cooperatively, and accordingly the storage battery **4** can be used as a "buffer" for the load **9.** As a result, the fuel cell **6** can be continuously operated in a comparatively efficient output range, and it is possible to improve the energy efficiency of the electric power supply system **1.**

In the embodiment, order of the second power converter **5** and the third power converter **7** along the grid-connected feed line **11** may be reversed. That is, the second power converter **5** and the third power converter **7** are connected to the grid-connected feed line **11** so that the second power converter **5** is located at more upstream side of the grid-connected feed line **11** in the above example, but they may be connected so that the third power converter **7** is located at more upstream side of the grid-connected feed line **11.** In this case, the first to third power converters **3, 5** and **7** are connected to the grid-connected feed line **11** in the order of the first power converter **3,** the third power converter **7** and the second power converter 5 from the upstream end side the grid-connected feed line **11.** Further, the first sensor **14** is disposed along the grid-connected feed line **11** at a position between the first power converter **3** and the third power converter **7.** Also in this configuration, the controllers **55** and **75** are configured to determine upper limits of output power of the second and the third power converters **5** and **7** with respect to the grid-connected feed line **11** so as to increase the output power of them with respect to the grid-connected feed line **11** as much as possible while the power flowing back to the power grid through the grid-connected feed line **11** is kept zero at the position where the first sensor **14** is disposed.

Other configurations and functions of the embodiment are analogous to those in the first embodiment.

### (Third Embodiment)

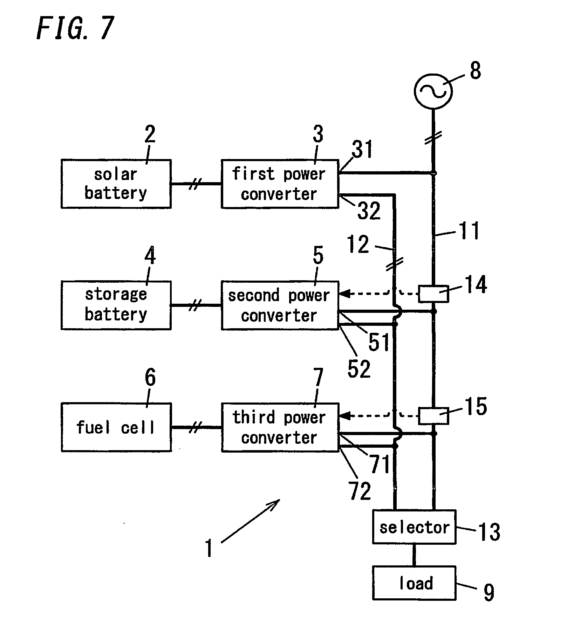

As shown in FIG. 7, an electric power supply system **1** of the present embodiment differs from the electric power supply system 1 of the first embodiment in that the present embodiment further includes a grid-independent feed line **12** which is disconnected from a power grid **8** and which is physically separated from the grid-connected feed line **11.** Like kind elements are assigned the same reference numerals as depicted in the first embodiment and explanation is omitted as appropriate.

In the example of FIG. **7****,** the first to third power converters **3, 5** and **7** are each configured to switch between two operation states of a grid connecting operation for coordinating with the power grid **8** and a grid independent operation for operating independently of the power grid **8.** The first power converter **3** has an independent output terminal **32** that functions as a power output terminal in the grid independent operation, in addition to a connection output terminal **31.** Similarly, the second power converter **5** has an independent output terminal **52** that functions as a power output terminal in the grid independent operation, in addition to a connection output terminal **51.** Further, the third power converter **7** has an independent output terminal **72** that functions as a power output terminal in the grid independent operation, in addition to a connection output terminal **71.**

The independent output terminals **32, 52** and **72** of the first to third power converters **3, 5** and **7** are each connected to the grid-independent feed line **12,** and therefore the independent output terminals **32, 52** and **72** are connected with each other via the grid-independent feed line **12.** Each of the power converters **3, 5** and **7** has a grid-independent side switch (not shown). The AC output terminals of the DC/AC converters **34, 54** and **74** are connected to the connection output terminals **31, 51** and **71** via the corresponding grid-connection side switches **36, 56** and **76,** respectively, and also connected to the independent output terminals **32, 52** and **72** via the corresponding grid-independent side switches, respectively. The controllers **35, 55** and **75** are configured to switch on the corresponding grid-connection side switches **36, 56** and **76** and switch off the corresponding grid-independent side switches under the grid connecting operation, and also to switch on the corresponding grid-independent side switches and switch off the corresponding grid-connection side switches **36, 56** and **76** under the grid independent operation.

The first to third power converters **3, 5** and **7** have a failure detector (not shown) configured to detect a presence/absence of failure in the power grid **8** such as power outage, and are each configured to automatically switch between the grid connecting operation and the grid independent operation in accordance with a detecting result of the failure detector. In short, each of the controllers **35, 55** and **75** is configured to select the grid connecting operation when the power grid **8** is in normal, and also to operate in the grid independent operation when the power grid **8** is in failure such as power outage.

A load **9** is connected to each of the grid-connected feed line **11** and the grid-independent feed line **12.** In the example of FIG. 7, a selector **13** is interposed between the load **9** and the grid-connected and grid-independent feed lines **11** and **12.** The selector **13** is configured to switch a connection destination of the load **9** between the grid-connected feed line **11** and the grid-independent feed line **12.** With this configuration, by switching the selector **13** so as to connect the load **9** to the grid-connected feed line 11 in the grid connecting operation and also to connect the load **9** to the grid-independent feed line **12** in the grid independent operation, it is possible to save the time and effort for disconnecting and reconnecting the load **9** when switching the operations.

The selector **13** may have a configuration in which it is manually switched according to an operation by a user. However, in the embodiment, the selector **13** is configured to automatically switch without being operated by a user. Specifically, the selector **13** is formed of a relay, and is configured to switch a connection destination of the load **9** between the grid-connected feed line **11** and the grid-independent feed line **12** depending on an excitation of a coil caused by electric power supplied from the power grid **8** through the grid-connected feed line **11.** That is, the selector **13** connects the load **9** to the grid-connected feed line **11** as a result of the excitation of the coil caused by the electric power from the power grid **8** when the power grid **8** is in normal, and connects the load **9** to the grid-independent feed line **12** when the power grid **8** is in failure such as power outage.

Note that the grid-independent feed line **12** is not necessarily to be directly connected to the load **9** of an electric apparatus, but may be connected to an outlet (not shown) to which a load **9** is detachably attached. Further, the selector **13** may be omitted and each of the grid-connected feed line **11** and the grid-independent feed line **12** may be connected to a load **9** or an outlet individually. In this case, the grid-connected feed line **11** is connected to an outlet that is usable during the grid connecting operation of the power converters, while the grid-independent feed line **12** is connected to a dedicated outlet for independent operation that is usable during the grid independent operation of the power converters.

In the embodiment, one of the first to third power converters **3, 5** and **7** (one power converter out of the first to third power converters **3, 5** and **7;** in this example, the second power converter 5) is configured to perform a constant voltage control so as to maintain the output voltage thereof with respect to the grid-independent feed line **12** at a predetermined target value in the grid independent operation. The other power converters (in this example, the first and third power converters **3** and **7**) are each configured, in the grid independent operation, to perform a current control so as to sense the voltage of the grid-independent feed line **12** to adjust the output current thereof based on the sensed voltage. Note that the target value for the constant voltage control may be variable.

When detecting a failure in the power grid **8,** the second power converter **5** switches the operation mode of the controller **55** from the current control to the constant voltage control. That is, the second power converter **5** is configured to perform the current control so as to sense the voltage of the grid-connected feed line **11** to adjust the output current thereof based on the sensed voltage in the grid connecting operation, and is to be automatically switched into the constant voltage control when it detects a failure in the power grid **8** so as to operate in the grid independent operation.

When detecting a failure in the power grid **8,** each of the first and third power converters **3** and **7** is to be operated in the grid independent operation and to perform the current control so as to sense the voltage of the grid-independent feed line **12** to adjust its own output current based on the sensed voltage. In this time, the grid-independent feed line **12** is applied with the output voltage of the second power converter **5.** Thus, each of the first and third pow**er converters 3** and **7** supplies electric power to the load **9** under the current control, with the output voltage of the second power converter **5** regarded as a "pseudo" grid voltage (as a reference voltage).

With this configuration, when the power grid **8** is in failure such as power outage, the one of the first to third power converters **3, 5** and **7** is switched into the constant voltage control, and accordingly the other power converters can continue the operation under the current control. Therefore, even when the power grid **8** is in failure, not only the discharge power of the storage battery **4** but also generating power of the solar battery **2** and the fuel cell **6** can be supplied to the load **9.** As a result, electric power can be stably supplied to the load **9.** In addition, the power converters **3, 5** and **7** have the function (failure detector) configured to detect failure in the power grid **8,** it is not necessary to add a device for detecting a presence/absence of failure in the power grid **8.** Accordingly, it is possible to simplify the system configuration. Note that the above mentioned "one of the first to third power converters (i.e., a power converter that is configured to perform the constant voltage control in the grid independent operation)" is preferably selected from the second and the third power converters **5** and **7,** because these converters can supply stable output voltage. The above mentioned "one of the first to third power converters" is, preferably, the second power converter 5 which is connected to the storage battery **4.**

In addition, because the embodiment includes the selector **13** that is configured to switch the connection destination of the load **9** between the grid-connected feed line **11** and the grid-independent feed line **12** depending on the grid connecting operation and the grid independent operation, it is possible to save the time and effort for disconnecting and reconnecting the load **9.** Furthermore, because the selector **13** is configured to automatically switch the connection destination of the load **9** in accordance with a presence/absence of failure in the power grid **8,** it is possible to save the time and effort for a user to operate the selector **13.** The selector **13** may be configured to switch the connection destination of the load **9** between the grid-connected feed line **11** and the grid-independent feed line **12** in response to a switch signal transmitted from one (for example, the second power converter **5**) of the first to third power converters **3, 5 and 7.**

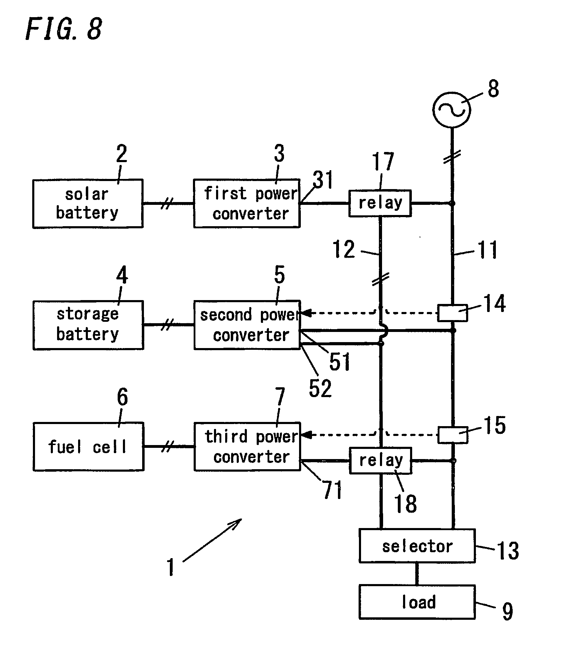

In another example of the embodiment, only a part (in this example, the second power converter **5**) of the first to third power converters **3, 5** and **7** is configured to switch between two operation states of the grid connecting operation and the grid independent operation. In this example, as shown in FIG. 8, the other power converters (in this example, the first and the third power converters **3** and **7**) that are not configured to switch between the grid connecting operation and the grid independent operation are each connected to the grid-connected feed line **11** and the grid-independent feed line **12** via a relay **17** or **18** as an external selector. The relays **17** and **18** as the external selectors are configured to switch respective connection destinations of the connection output terminals **31** and **71** of the first and third power converters **3** and **7** between the grid-connected feed line **11** and the grid-independent feed line **12** in accordance with control of the second power converter **5.**

In the example of FIG. 8, the second power converter **5** configured to switch between the grid connecting operation and the grid independent operation performs the constant voltage control so as to maintain the output voltage thereof with respect to the grid-independent feed line **12** at a predetermined target value in the grid independent operation. The other power converters (in this example, the first and third power converters **3** and **7**) are each configured to perform a current control so as to sense a voltage of the grid-connected feed line **11** or the grid-independent feed line **12** to adjust the output current thereof based on the sensed voltage. Note that the target value for the constant voltage control may be variable.

That is, when detecting a failure in the power grid **8,** the second power converter **5** switches the operation mode of the controller **55** from the current control to the constant voltage control. The second power converter **5** is configured to perform the current control so as to sense the voltage of the
grid-connected feed line **11** to adjust the output current thereof based on the sensed voltage in the grid connecting operation, and is to be automatically switched into the constant voltage control when it detects failure in the power grid **8** to operate in the grid independent operation. In this time, the second power converter **5** controls the relays **17** and **18** as the external selectors so as to switch the connection destinations of the connection output terminals **31** and **71** of the first and the third power converters **3** and **7** from the grid-connected feed line **11** into the grid-independent feed line **12.**

Each of the first and third power converters **3** and **7** performs the current control so as to sense the voltage of the grid-independent feed line **12** to adjust its own output current based on the sensed voltage. In this time, the grid-independent feed line **12** is applied with the output voltage of the second power converter **5.** Thus, each of the first and third power converters **3** and **7** supplies electric power to the load **9** under current control, with the output voltage of the second power converter **5** regarded as a "pseudo" grid voltage (as a reference voltage).

With this configuration, a power converter having a function for switching the operation states and a power converter not having the function for switching the operation states can cooperate with each other even when the power grid **8** is in failure such as power outage. Therefore, even when the power grid **8** is in failure, not only discharge power of the storage battery **4** but also generating power of the solar battery **2** and the fuel cell **6** can be supplied to the load **9.** As a result, electric power can be stably supplied to the load **9.** Note that the above mentioned "power converter (i.e., a power converter that has a function for switching between the grid connecting operation and the grid independent operation)" is preferably selected from the second and the third power converters **5** and **7,** because these converters can supply stable output voltage. The above mentioned "power converter" is, preferably, the second power converter **5** which is connected to the storage battery **4.**

Incidentally, in a case where the electric power supply system includes two or more loads **9** which are connected to the grid-connected feed line **11** or the grid-independent feed line **12,** the electric power supply system 1 may have a structure for selecting a load(s) **9** to be supplied with electric power.

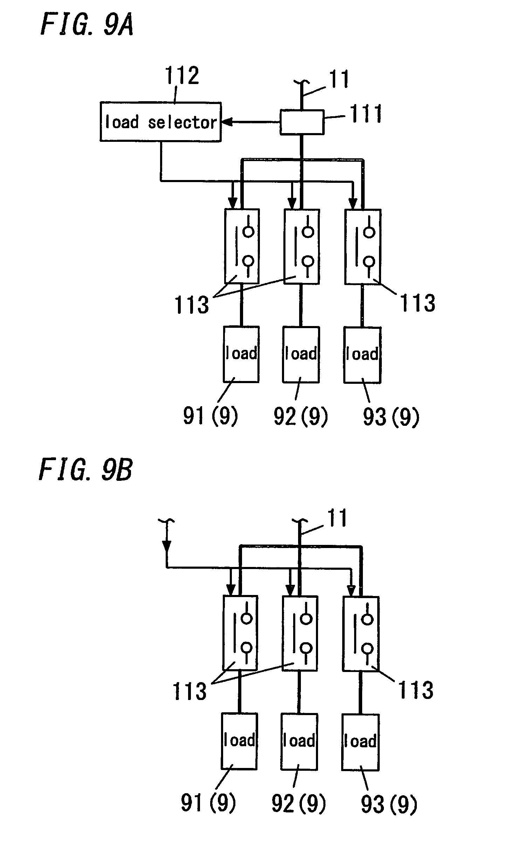

As shown in FIG. 9A, in a case where two or more (in this example, three) loads **91** to **93** are connected to the grid-connected feed line **11,** load-breakers **113** are interposed between the grid-connected feed line **11** and the loads **91** to **93,** respectively. Furthermore, the electric power supply system 1 of this example includes: a current sensor **111** configured to sense the power supplied to the loads **91** to **93;** and a load selector **112** configured to control the load-breakers **113** in accordance with the power supplied to the loads **91** to **93.** The load selector **112** has a memory (not shown) that stores predetermined priority orders of the loads **91** to **93.**

In the configuration of FIG. 9A, the load selector **112** is configured to monitor the (total) power supplied to the loads **91** to **93,** sensed with the current sensor **111,** and also, when the power supplied to the loads exceeds a predetermined threshold, to sequentially turn off the load-breakers **113** of the loads **91** to **93** according to the priority orders so that a load-breaker **113** corresponding to a load given a lower priority is preferentially turned off. In an example where the loads **91, 92** and **93** are given the priority orders in a reversed order, when the power supplied to the loads exceeds the threshold, the load selector **112** firstly turns off a load-breaker **113** to which the load **91** given the lowest priority is connected and to thereby stop power supply to the load **91.** If the power supplied to the loads is still greater than the threshold in this state, the load selector **112** then turns off a load-breaker **113** to which the load **92** given the second lowest priority is connected and to thereby stop power supply to the load **92.**

In another example, the electric power supply system **1** may be configured such that the load selector(s) **112** is housed in any of the first to third power converters **3, 5** and **7,** and the load-breakers **113** are controlled in accordance with a control signal from the first to third power converters **3, 5** and **7,** as shown in FIG. 9B. In the configuration of FIG. 9B, the load selector in the first to third power converters **3, 5** and **7** is configured to monitor each output power of the power converters **3, 5** and **7** as well as the (total) power supplied to the loads **9.** When a difference between the output power and the power supplied to the loads is lower than a predetermined threshold, the load selector sequentially turns off the load-breakers **113** of the loads **91** to **93** according to the priority orders so that a load-breaker **113** corresponding to a load given a lower priority is preferentially turned off.

According to the above-mentioned electric power supply system **1** which has the structure for selecting a load(s) **9** to be supplied with electric power, the electric power supply system **1** can stably supply electric power to a load(s) **9** given the higher priority, even when the amount of electric power to be supplied to the loads **9** is limited as in the case of the grid independent operation.

Other configurations and functions of the embodiment are analogous to those in the first embodiment. Note that the embodiment can be combined with the second embodiment in which the second power converter **5** and the third power converter **7** are configured to communicate with each other.

## Claims

1. An electric power supply system comprising:
a first power converter (3) which is connected to a first power generator configured to generate electric power that is allowed to flow back to a power grid (8) and which is configured to carry out electric conversion of generated power of the first power generator;
a second power converter (5) which is connected to a storage battery (4) and which is configured to charge and discharge the storage battery (4); and
a third power converter (7) which is connected to a second power generator configured to generate electric power that is forbidden to flow back to the power grid (8) and which is configured to carry out electric conversion of generated power of the second power generator,
wherein the electric power supply system is configured to supply electric power to at least one load (9) through a grid-connected feed line (11), said power grid (8) being connected to an upstream end of the grid-connected feed line (11), said load (9) being connected to a downstream end of the grid-connected feed line (11),
the first to third power converters (3, 5, 7) are connected to the grid-connected feed line (11) in a manner that the first power converter (3) is located at most upstream side of the grid-connected feed line (11),
the electric power supply system further comprises a first sensor (14) which is disposed at a position between a junction of the grid-connected feed line (11) and the first power converter (3) and a junction of the grid-connected feed line (11) and one of the second and third power converters (5, 7), located at more upstream side of the grid-connected feed line (11), said first sensor (14) being configured to sense electric power flowing back to the power grid (8) through the grid-connected feed line (11), and
the second power converter (5) is configured to control charging and discharging of the storage battery (4) so that the electric power flowing back to the power grid (8), sensed with the first sensor (14) is kept zero, and the third power converter (7) is configured to control output power thereof to the grid-connected feed line (11) so that the electric power flowing back to the power grid (8), sensed with the first sensor (14) is kept zero,
wherein said one of the second and third power converters (5, 7), located at more upstream side of the grid-connected feed line (11) is connected to the first sensor (14),
the second and third power converters (5, 7) are configured to control the charging and discharging of the storage battery (4) and to control the output power of the third power converter (7) to the grid-connected feed line (11) while communicating with each other so that the electric power flowing back to the power grid (8), sensed with the first sensor (14) is kept zero.

2. An electric power supply system comprising:
a first power converter (3) which is connected to a first power generator configured to generate electric power that is allowed to flow back to a power grid (8) and which is configured to carry out electric conversion of generated power of the first power generator;
a second power converter which (5) is connected to a storage battery (4) and which is configured to charge and discharge the storage battery (4); and
a third power converter (7) which is connected to a second power generator configured to generate electric power that is forbidden to flow back to the power grid (8) and which is configured to carry out electric conversion of generated power of the second power generator,
wherein the electric power supply system is configured to supply electric power to at least one load (9) through a grid-connected feed line (11), said power grid (8) being connected to an upstream end of the grid-connected feed line (11), said load (9) being connected to a downstream end of the grid-connected feed line (11),
the first to third power converters (3, 5, 7) are connected to the grid-connected feed line (11) in a manner that the first power converter (3) is located at most upstream side of the grid-connected feed line (11),
the electric power supply system further comprises a first sensor (14) which is disposed at a position between a junction of the grid-connected feed line (11) and the first power converter (3) and a junction of the grid-connected feed line (11) and one of the second and third power converters (5, 7), located at more upstream side of the grid-connected feed line (11), said first sensor (14) being configured to sense electric power flowing back to the power grid (8) through the grid-connected feed line (11), and
the second power converter (5) is configured to control charging and discharging of the storage battery (4) so that the electric power flowing back to the power grid (8), sensed with the first sensor (14) is kept zero, and the third power converter (7) is configured to control output power thereof to the grid-connected feed line (11) so that the electric power flowing back to the power grid (8), sensed with the first sensor (14) is kept zero,
wherein the second and third power converters (5, 7) are connected to the grid-connected feed line (11) in a manner that the second power converter (5) is located at more upstream side of the grid-connected feed line (11),
the electric power supply system further comprises a second sensor (15) which is disposed at a position between a junction of the grid-connected feed line (11) and the second power converter (5) and a junction of the grid-connected feed line (11) and the third power converter (7), said second sensor (15) being configured to sense electric power flowing back to the power grid (8) through the grid-connected feed line (11),
the second power converter (5) is connected to the first sensor (14) and is configured to control the charging and discharging of the storage battery (4) so that the electric power flowing back to the power grid (8), sensed with the first sensor (14) is kept zero, and
the third power converter (7) is connected to the second sensor (15) and is configured to control the output power thereof to the grid-connected feed line (11) so that the electric power flowing back to the power grid (8), sensed with the second sensor (15) is kept zero.

3. The electric power supply system according to claim 1 or 2, wherein the second power generator (5) is formed of a cogeneration system configured to simultaneously generate electric and thermal energy.

4. The electric power supply system according to any one of the preceding claims wherein
the first power generator is formed of a solar battery (2),
the second power generator is formed of a fuel cell (6), and
the first power converter (3) is configured to allow surplus power of generated power of the solar battery (2) to flow back to the power grid (8).

5. The electric power supply system according to any one of the preceding claims,
wherein
the electric power supply system further comprises:
a disconnecting device (81) disposed at more upstream side of the grid-connected feed line (11) compared to the junction of the grid-connected feed line (11) and the first power converter (3); and
a failure detector (82) configured, when detecting a failure in the power grid (8), to turn off the disconnecting device (81) and also to transmit a failure detection signal to one of the first to third power converters (3,5, 7), and
said one of the first to third power converters (3, 5, 7) is configured to perform a constant voltage control so as to maintain an output voltage thereof to the grid-connected feed line (11) at a predetermined target value when receiving the failure detection signal, and the other power converters are each configured to perform a current control so as to sense a voltage of the grid-connected feed line (11) to adjust an output current thereof based on a sensed voltage.

6. The electric power supply system according to any one of the claims 1 to 4, wherein
the first to third power converters (3, 5, 7) are each configured to switch between a grid connecting operation for supplying electric power to the load (9) through the grid-connected feed line (11) and a grid independent operation for supplying electric power to the load (9) through a grid-independent feed line (12) disconnected from the power grid (8), and
one of the first to third power converters (3, 5, 7) is configured, in the grid independent operation, to perform a constant voltage control so as to maintain an output voltage thereof to the grid-independent feed line (12) at a predetermined target value, and the other power converters are each configured, in the grid independent operation, to perform a current control so as to sense a voltage of the grid-independent feed line (12) to adjust an output current thereof based on a sensed voltage.

7. The electric power supply system according to any one of the claims 1 to 4, wherein
one of the first to third power converters (3, 5, 7) is configured to switch between a grid connecting operation for supplying electric power to the load (9) through the grid-connected feed line (11) and a grid independent operation for supplying electric power to the load (9) through a grid-independent feed line (12) disconnected from the power grid (8), and the other power converters are each connected to the grid-connected feed line (11) and the grid-independent feed line (12) via an external selector (17, 18) configured to switch connection destination of a corresponding converter between the grid-connected feed line (11) and the grid-independent feed line (12),
said one of the first to third power converters (3, 5, 7) is configured, in the grid independent operation, to perform a constant voltage control so as to maintain an output voltage thereof to the grid-independent feed line (12) at a predetermined target value and also to switch the external selector (17, 18) to the grid-independent feed line (12) side, and the other power converters are each configured to perform a current control so as to sense a voltage of the grid-independent feed line (12) to adjust an output current thereof based on a sensed voltage.

8. The electric power supply system according to any one of the preceding claims wherein
the at least one load (9) comprises two or more loads (91 to 93), and
load-breakers (113) which are disposed along respective power feed lines to the loads (91 to 93);
a memory configured to store priority orders of the loads (91 to 93); and
a load selector (112) configured to sequentially turn off the load-breakers (113) in accordance with power supplied to the loads (91 to 93) so that a load-breaker (113) corresponding to a load (91) given a lower priority is preferentially turned off.

## Patentansprüche

1. Stromversorgungssystem, umfassend:
einen ersten Leistungswandler (3), der mit einem ersten Stromgenerator verbunden ist, der zum Erzeugen von elektrischem Strom konfiguriert ist, der zurück zu einem Stromversorgungsnetz (8) fließen kann, und der dazu konfiguriert ist, eine elektrische Umwandlung des vom ersten Stromgenerator erzeugten Stroms durchzuführen;
einen zweiten Leistungswandler (5), der mit einem Akkumulator (4) verbunden ist und der dazu konfiguriert ist, den Akkumulator (4) zu laden und zu entladen; und
einen dritten Leistungswandler (7), der mit einem zweiten Stromgenerator verbunden ist, der zum Erzeugen von elektrischem Strom konfiguriert ist, der nicht zurück zu dem Stromversorgungsnetz (8) fließen darf, und der dazu konfiguriert ist, eine elektrische Umwandlung des vom zweiten Stromgenerator erzeugten Stroms durchzuführen,
wobei die Stromversorgung dazu konfiguriert ist, mindestens eine Last (9) über eine mit dem Versorgungsnetz verbundene Speiseleitung (11) mit Strom zu versorgen, wobei das Stromversorgungsnetz (8) mit einem stromaufwärtigen Ende der mit dem Versorgungsnetz verbundenen Speiseleitung (11) verbunden ist, wobei die Last (9) mit einem stromabwärtigen Ende der mit dem Versorgungsnetz verbundenen Speiseleitung (11) verbunden ist,
wobei der erste bis dritte Leistungswandler (3, 5, 7) auf eine Weise mit der mit dem Versorgungsnetz verbundenen Speiseleitung (11) verbunden sind, dass sich der erste Leistungswandler (3) an der am weitesten stromaufwärtig befindlichen Seite der mit dem Versorgungsnetz verbundenen Speiseleitung (11) befindet,
wobei die Stromversorgung weiterhin einen ersten Sensor (14) umfasst, der an einer Position zwischen einer Verbindung der mit dem Versorgungsnetz verbundenen Speiseleitung (11) und dem ersten Leistungswandler (3) und einer Verbindung der mit dem Versorgungsnetz verbundenen Speiseleitung (11) und entweder dem zweiten oder dritten Leistungswandler (5, 7), der sich an einer mehr stromaufwärtig befindlichen Seite der mit dem Versorgungsnetz verbundenen Speiseleitung (11) befindet, angeordnet ist, wobei der erste Sensor (14) zum Erfassen von Strom konfiguriert ist, der über die mit dem Versorgungsnetz verbundene Speiseleitung (11) zurück in das Stromversorgungsnetz (8) fließt, und
wobei der zweite Leistungswandler (5) dazu konfiguriert ist, das Laden und Entladen des Akkumulators (4) so zu steuern, dass der in das Stromversorgungsnetz (8) zurückfließende Strom, der mit dem ersten Sensor (14) erfasst wird, auf Null gehalten wird, und der dritte Leistungswandler (7) dazu konfiguriert ist, den Ausgangsstrom davon in die mit dem Versorgungsnetz verbundene Speiseleitung (11) so zu steuern, dass der in das Stromversorgungsnetz (8) zurückfließende Strom, der mit dem ersten Sensor (14) erfasst wird, auf Null gehalten wird,
wobei der eine des zweiten und dritten Leistungswandlers (5, 7), der sich an einer mehr stromaufwärtig befindlichen Seite der mit dem Versorgungsnetz verbundenen Speiseleitung (11) befindet, mit dem ersten Sensor (14) verbunden ist,
wobei der zweite und dritte Leistungswandler (5, 7) dazu konfiguriert sind, das Laden und Entladen des Akkumulators (4) zu steuern und den Ausgangsstrom des dritten Leistungswandlers (7) in die mit dem Versorgungsnetz verbundene Speiseleitung (11) zu steuern, während sie miteinander Daten austauschen, sodass der in das Stromversorgungsnetz (8) zurückfließende Strom, der mit dem ersten Sensor (14) erfasst wird, auf Null gehalten wird.

2. Stromversorgungssystem, umfassend:
einen ersten Leistungswandler (3), der mit einem ersten Stromgenerator verbunden ist, der zum Erzeugen von elektrischem Strom konfiguriert ist, der zurück zu einem Stromversorgungsnetz (8) fließen kann, und der dazu konfiguriert ist, eine elektrische Umwandlung des vom ersten Stromgenerator erzeugten Stroms durchzuführen;
einen zweiten Leistungswandler (5), der mit einem Akkumulator (4) verbunden ist und der dazu konfiguriert ist, den Akkumulator (4) zu laden und zu entladen; und
einen dritten Leistungswandler (7), der mit einem zweiten Stromgenerator verbunden ist, der zum Erzeugen von elektrischem Strom konfiguriert ist, der nicht zurück zu dem Stromversorgungsnetz (8) fließen darf, und der dazu konfiguriert ist, eine elektrische Umwandlung des vom zweiten Stromgenerator erzeugten Stroms durchzuführen,
wobei die Stromversorgung dazu konfiguriert ist, mindestens eine Last (9) über eine mit dem Versorgungsnetz verbundene Speiseleitung (11) mit Strom zu versorgen, wobei das Stromversorgungsnetz (8) mit einem stromaufwärtigen Ende der mit dem Versorgungsnetz verbundenen Speiseleitung (11) verbunden ist, wobei die Last (9) mit einem stromabwärtigen Ende der mit dem Versorgungsnetz verbundenen Speiseleitung (11) verbunden ist,
wobei der erste bis dritte Leistungswandler (3, 5, 7) auf eine Weise mit der mit dem Versorgungsnetz verbundenen Speiseleitung (11) verbunden sind, dass sich der erste Leistungswandler (3) an der am weitesten stromaufwärtig befindlichen Seite der mit dem Versorgungsnetz verbundenen Speiseleitung (11) befindet,
wobei die Stromversorgung weiterhin einen ersten Sensor (14) umfasst, der an einer Position zwischen einer Verbindung der mit dem Versorgungsnetz verbundenen Speiseleitung (11) und dem ersten Leistungswandler (3) und einer Verbindung der mit dem Versorgungsnetz verbundenen Speiseleitung (11) und entweder dem zweiten oder dritten Leistungswandler (5, 7), der sich an einer mehr stromaufwärtig befindlichen Seite der mit dem Versorgungsnetz verbundenen Speiseleitung (11) befindet, angeordnet ist, wobei der erste Sensor (14) zum Erfassen von Strom konfiguriert ist, der über die mit dem Versorgungsnetz verbundene Speiseleitung (11) zurück in das Stromversorgungsnetz (8) fließt, und
wobei der zweite Leistungswandler (5) dazu konfiguriert ist, das Laden und Entladen des Akkumulators (4) so zu steuern, dass der in das Stromversorgungsnetz (8) zurückfließende Strom, der mit dem ersten Sensor (14) erfasst wird, auf Null gehalten wird, und der dritte Leistungswandler (7) dazu konfiguriert ist, den Ausgangsstrom davon in die mit dem Versorgungsnetz verbundene Speiseleitung (11) so zu steuern, dass der in das Stromversorgungsnetz (8) zurückfließende Strom, der mit dem ersten Sensor (14) erfasst wird, auf Null gehalten wird,
wobei der zweite und dritte Leistungswandler (5, 7) auf eine Weise mit der mit dem Versorgungsnetz verbundenen Speiseleitung (11) verbunden sind, dass sich der zweite Leistungswandler (5) an der mehr stromaufwärtig befindlichen Seite der mit dem Versorgungsnetz verbundenen Speiseleitung (11) befindet,
wobei die Stromversorgung weiterhin einen zweiten Sensor (15) umfasst, der an einer Position zwischen einer Verbindung der mit dem Versorgungsnetz verbundenen Speiseleitung (11) und dem zweiten Leistungswandler (5) und einer Verbindung der mit dem Versorgungsnetz verbundenen Speiseleitung (11) und dem dritten Leistungswandler (7), angeordnet ist, wobei der zweite Sensor (15) zum Erfassen von Strom konfiguriert ist, der über die mit dem Versorgungsnetz verbundene Speiseleitung (11) zurück in das Stromversorgungsnetz (8) fließt,
wobei der zweite Leistungswandler (5) mit dem ersten Sensor (14) verbunden und dazu konfiguriert ist, das Laden und Entladen des Akkumulators (4) so zu steuern, dass der in das Stromversorgungsnetz (8) zurückfließende Strom, der mit dem ersten Sensor (14) erfasst wird, auf Null gehalten wird, und
wobei der dritte Leistungswandler (7) mit dem zweiten Sensor (15) verbunden und dazu konfiguriert ist, den Ausgangsstrom davon in die mit dem Versorgungsnetz verbundene Speiseleitung (11) so zu steuern, dass der in das Stromversorgungsnetz (8) zurückfließende Strom, der mit dem zweiten Sensor (15) erfasst wird, auf Null gehalten wird.

3. Stromversorgungssystem nach Anspruch 1 oder 2, wobei der zweite Stromgenerator (5) aus einem Cogenerationssystem ausgebildet ist, das dazu konfiguriert ist, gleichzeitig elektrische und thermische Energie zu erzeugen.

4. Stromversorgungssystem nach einem der vorhergehenden Ansprüche, wobei
der erste Stromgenerator aus einer Solarbatterie (2) ausgebildet ist,
der erste Stromgenerator aus einer Solarbatterie (6) ausgebildet ist,
der erste Leistungswandler (3) dazu konfiguriert ist, Überschussstrom des erzeugten Stroms der Solarbatterie (2) zurück in das Stromversorgungsnetz (8) fließen zu lassen.

5. Stromversorgungssystem nach einem der vorhergehenden Ansprüche, wobei
das Stromversorgungssystem weiterhin umfasst:
eine Unterbrechungsvorrichtung (81), die an der in Bezug zu der Verbindung der mit dem Versorgungsnetz verbundenen Speiseleitung (11) und dem ersten Leistungswandler (3) mehr stromaufwärtig befindlichen Seite der mit dem Versorgungsnetz verbundenen Speiseleitung (11) angeordnet ist; und
einen Störungsdetektor (82), der dazu konfiguriert ist, beim Erfassen einer Störung im Stromversorgungsnetz (8) die Unterbrechungsvorrichtung (81) auszuschalten und außerdem ein Störungserfassungssignal an einen des ersten bis dritten Leistungswandlers (3, 5, 7) zu senden, und
wobei der eine des ersten bis dritten Leistungswandlers (3, 5, 7) dazu konfiguriert ist, eine Steuerung konstanter Spannung durchzuführen, um so eine Ausgangsspannung davon an der mit dem Versorgungsnetz verbundenen Speiseleitung (11) mit einem vorbestimmten Zielwert aufrechtzuerhalten, wenn das Störungserfassungssignal eingeht, und wobei die anderen Leistungswandler jeweils dazu konfiguriert sind, eine Stromsteuerung vorzunehmen, um so eine Spannung der mit dem Versorgungsnetz verbundenen Speiseleitung (11) zu erfassen, um einen Ausgangsstrom davon auf der Grundlage der erfassten Spannung anzupassen.

6. Stromversorgungssystem nach einem der Ansprüche 1 bis 4, wobei
der erste bis dritte Leistungswandler (3, 5, 7) jeweils dazu konfiguriert ist, zwischen einem Betrieb mit Anschluss an das Versorgungsnetz zum Einspeisen von Strom an die Last (9) über die mit dem Versorgungsnetz verbundene Speiseleitung (11) und einem vom Versorgungsnetz unabhängigen Betrieb zum Einspeisen von Strom an die Last (9) über eine vom Versorgungsnetz unabhängige Speiseleitung (12), die von dem Versorgungsnetz (8) getrennt ist, umzuschalten, und
wobei einer des ersten bis dritten Leistungswandlers (3, 5, 7) dazu konfiguriert ist, im vom Versorgungsnetz unabhängigen Betrieb eine Steuerung konstanter Spannung durchzuführen, um so eine Ausgangsspannung davon an die vom Versorgungsnetz unabhängige Speiseleitung (12) mit einem vorbestimmten Zielwert vorzunehmen, und wobei die anderen Leistungswandler jeweils dazu konfiguriert sind, im vom Versorgungsnetz unabhängigen Betrieb eine Stromsteuerung vorzunehmen, um so eine Spannung der vom Versorgungsnetz unabhängigen Speiseleitung (12) zu erfassen, um einen Ausgangsstrom davon auf der Grundlage der erfassten Spannung anzupassen.

7. Stromversorgungssystem nach einem der Ansprüche 1 bis 4, wobei
einer des ersten bis dritten Leistungswandlers (3, 5, 7) dazu konfiguriert ist, zwischen einem Betrieb mit Anschluss an das Versorgungsnetz zum Einspeisen von Strom an die Last (9) über die mit dem Versorgungsnetz verbundene Speiseleitung (11) und einem vom Versorgungsnetz unabhängigen Betrieb zum Einspeisen von Strom an die Last (9) über eine vom Versorgungsnetz unabhängige Speiseleitung (12), die von dem Versorgungsnetz (8) getrennt ist, umzuschalten, und die anderen Leistungswandler jeweils über einen externen Wahlschalter (17, 18), der dazu konfiguriert ist, das Verbindungsziel eines entsprechenden Wandlers zwischen der mit dem Versorgungsnetz verbundenen Speiseleitung (11) und der vom Versorgungsnetz unabhängigen Speiseleitung (12) zu schalten, mit der mit dem Versorgungsnetz verbundenen Speiseleitung (11) und der vom Versorgungsnetz unabhängigen Speiseleitung (12) verbunden sind,
wobei der eine des ersten bis dritten Leistungswandlers (3, 5, 7) dazu konfiguriert ist, im vom Versorgungsnetz unabhängigen Betrieb eine Steuerung konstanter Spannung durchzuführen, um so eine Ausgangsspannung davon an der vom Versorgungsnetz unabhängigen Speiseleitung (12) mit einem vorbestimmten Zielwert aufrechtzuerhalten, und auch den externen Wahlschalter (17, 18), auf die Seite der vom Versorgungsnetz unabhängigen Speiseleitung (12) umzuschalten und wobei die anderen Leistungswandler jeweils dazu konfiguriert sind, eine Stromsteuerung vorzunehmen, um so eine Spannung der vom Versorgungsnetz unabhängigen Speiseleitung (12) zu erfassen, um einen Ausgangsstrom davon auf der Grundlage der erfassten Spannung anzupassen.

8. Stromversorgungssystem nach einem der vorhergehenden Ansprüche, wobei
die mindestens eine Last (9) zwei oder mehr Lasten (91 bis 93) umfasst und
Lastabschalter (113), die entlang der jeweiligen Speiseleitungen zu den Lasten (91 bis 93) angeordnet sind;
ein Speicher dazu konfiguriert ist, Prioritätsbefehle der Lasten (91 bis 93) zu speichern; und
ein Lastwahlschalter (112) dazu konfiguriert ist, die Lastabschalter (113) nacheinander in Übereinstimmung mit an den Lasten (91 bis 93) eingespeistem Strom abzuschalten, sodass vorzugsweise ein einer Last (91) mit geringerer Priorität entsprechender Lastabschalter (113) abgeschaltet wird.

## Revendications

1. Système d'alimentation électrique comprenant :
un premier convertisseur de puissance (3) qui est connecté à un premier générateur de puissance conçu pour générer une puissance électrique qui peut retourner vers un réseau électrique (8) et qui est conçu pour effectuer une conversion électrique de la puissance générée par le premier générateur de puissance ;
un deuxième générateur de puissance (5) qui est connecté à une batterie de stockage (4) et qui est conçu pour charger et décharger la batterie de stockage (4) ; et
un troisième convertisseur de puissance (7) qui est connecté à un deuxième générateur de puissance conçu pour générer une puissance électrique qui ne peut pas s'écouler en arrière vers le réseau électrique (8) et qui est conçu pour effectuer une conversion de la puissance électrique générée par le deuxième générateur de puissance,
le système d'alimentation électrique étant conçu pour alimenter en puissance électrique au moins une charge (9) par l'intermédiaire d'une ligne d'alimentation connectée au réseau (11), ladite grille de puissance (8) étant connectée à une extrémité amont de la ligne d'alimentation connectée au réseau (11), ladite charge (9) étant connectée à une extrémité aval de la ligne d'alimentation connectée au réseau (11),
les premier au troisième convertisseurs de puissance (3, 5, 7) sont connectés à la ligne d'alimentation connectée au réseau (11) de façon à ce que le premier convertisseur de puissance (3) soit situé le plus en amont possible de la ligne d'alimentation connectée au réseau (11),
le système d'alimentation électrique comprend en outre un premier capteur (14) qui est disposé au niveau d'une position entre une jonction de la ligne d'alimentation connectée au réseau (11) avec premier convertisseur de puissance (3) et une jonction de la ligne d'alimentation connectée au réseau (11) avec le deuxième ou troisième convertisseur de puissance (5, 7), situé plus en amont de la ligne d'alimentation connectée au réseau (11), ledit premier capteur (14) étant conçu pour détecter la puissance électrique retournant vers le réseau électrique (8) par l'intermédiaire de la ligne d'alimentation connectée au réseau (11), et
le deuxième convertisseur de puissance (5) est conçu pour contrôle la charge et la décharge de la batterie de stockage (4) de façon à ce que la puissance électrique retournant vers le réseau électrique (8), détectée avec le premier capteur (14), est maintenue à une valeur nulle, et le troisième convertisseur (7) est conçu pour contrôler la puissance de sortie de celui-ci vers la ligne d'alimentation connectée au réseau (11) de façon à ce que la puissance retournant vers le réseau électrique (8), détectée avec le premier capteur (14), soit maintenue à une valeur nulle,
ledit un des deuxième et troisième convertisseurs de puissance (5, 7), situé le plus en amont possible de la ligne d'alimentation connectée au réseau (11), étant connecté au premier capteur (14),
les deuxième et troisième convertisseurs (5, 7) sont conçus pour contrôler la charge et la décharge de la batterie de stockage (4) et pour contrôler la puissance de sortie du troisième convertisseur (7) vers la ligne d'alimentation connectée au réseau (11) tout en communiquant entre eux de façon à ce que la puissance électrique retournant vers le réseau électrique (8), détectée avec le premier capteur (14), soit maintenue à une valeur nulle.

2. Système d'alimentation électrique comprenant :
un premier convertisseur de puissance (3) qui est connecté à un premier générateur de puissance conçu pour générer une puissance électrique qui peut retourner vers un réseau électrique (8) et qui est conçu pour effectuer une conversion électrique de la puissance générée par le premier générateur de puissance ;
un deuxième convertisseur de puissance (5) est connecté à une batterie de stockage (4) et qui est conçu pour charger et décharger la batterie de stockage (4) ; et
un troisième convertisseur de puissance (7) qui est connecté à un deuxième générateur de puissance conçu pour générer une puissance électrique qui ne peut pas retourner vers le réseau électrique (8) et qui est conçu pour effectuer une conversion électrique de la puissance générée par le deuxième générateur de puissance,
le système d'alimentation électrique étant conçu pour alimenter en puissance électrique au moins une charge (9) par l'intermédiaire d'une ligne d'alimentation connectée au réseau (11), ledit réseau électrique (8) étant connecté à une extrémité amont de la ligne d'alimentation connectée au réseau (11), ladite charge (9) étant connectée à une extrémité aval de la ligne d'alimentation connectée au réseau (11).
les premier au troisième convertisseurs de puissance (3, 5, 7) sont connectés à la ligne d'alimentation connectée au réseau (11) de façon à ce que le premier convertisseur de puissance (3) soit situé le plus en amont possible de la ligne d'alimentation connectée au réseau (11),
le système d'alimentation électrique comprend en outre un premier capteur (14) qui est disposé au niveau d'une position entre une jonction de la ligne d'alimentation connectée au réseau (11) avec le premier convertisseur de puissance (3) et une jonction de la ligne d'alimentation connectée au réseau (11) avec un des deuxième et troisième convertisseurs de puissance (5, 7), situé plus en amont de la ligne d'alimentation connectée au réseau (11), ledit premier capteur (14) étant conçu pour détecter la puissance électrique retournant vers le réseau électrique (8) par l'intermédiaire de la ligne d'alimentation connectée au réseau (11), et
le deuxième convertisseur de puissance (5) est conçu pour contrôler la charge et la décharge de la batterie de stockage (4) de façon à ce que la puissance électrique retournant vers le réseau électrique (8), détectée avec le premier capteur (14), soit maintenue à une valeur nulle, et le troisième convertisseur de puissance (7) est conçu pour contrôler la puissance de sortie de celui-ci vers la ligne d'alimentation connectée au réseau (11) de façon à ce que la puissance électrique retournant vers le réseau électrique (8), détectée avec le premier capteur (14), soit maintenue à une valeur nulle,
les deuxième et troisième convertisseurs de puissance (5, 7) étant connectés à la ligne d'alimentation connectée au réseau (11) de façon à ce que le deuxième convertisseur de puissance (5) soit situé plus en amont de la ligne d'alimentation connectée au réseau (11),
le système d'alimentation électrique comprend en outre un deuxième capteur (15) qui est disposé au niveau d'une position entre une jonction de la ligne d'alimentation connectée au réseau (11) avec le deuxième convertisseur de puissance (5) et une jonction de la ligne d'alimentation connectée au réseau (11) avec le troisième convertisseur de puissance (7), ledit deuxième capteur (15) étant conçu pour détecter la puissance électrique retournant vers le réseau électrique (8) par l'intermédiaire de la ligne d'alimentation connectée au réseau (11),
le deuxième convertisseur de puissance (5) est connecté au premier capteur (14) et est conçu pour contrôler la charge et la décharge de la batterie de stockage (4) de façon à ce que la puissance électrique retournant vers le réseau électrique (8), détectée avec le premier capteur (14), soit maintenue à une valeur nulle, et
le troisième convertisseur de puissance (7) est connecté au deuxième capteur (15) et est conçu pour contrôler la puissance de sortie de celui-ci vers la ligne d'alimentation connectée au réseau (11) de façon à ce que la puissance électrique retournant vers le réseau électrique (8), détectée avec le deuxième capteur (15) soit maintenue à une valeur nulle.

3. Système d'alimentation électrique selon la revendication 1 ou 2, dans lequel le deuxième générateur de puissance (5) est constitué d'un système de cogénération conçu pour générer simultanément une énergie électrique et une énergie thermique.

4. Système d'alimentation électrique selon l'une des revendications précédentes, dans lequel
le premier générateur de puissance est constitué d'une batterie solaire (2),
le deuxième générateur de puissance est constitué d'une pile à combustible (6), et
le premier convertisseur de puissance (3) est conçu pour permettre à la puissance en excès générée par le batterie solaire (2) de retourner vers le réseau électrique (8).

5. Système d'alimentation électrique selon l'une des revendications précédentes, dans lequel
le système d'alimentation électrique comprend en outre :
un dispositif de déconnexion (81) disposé plus en amont de la ligne d'alimentation connectée au réseau (11) par rapport à la jonction de la ligne d'alimentation connectée au réseau (11) avec le premier convertisseur de puissance (3) ;
un détecteur de défaillance (82) conçu, lors de la détection d'une défaillance du réseau électrique (8), pour désactiver le dispositif de déconnexion (81) et pour transmettre un signal de détection de défaillance aux premier au troisième convertisseurs de puissance (3, 5, 7), et
ledit un des premier au troisième convertisseurs de puissance (3, 5, 7) est conçu pour effectuer un contrôle de tension constante de façon à maintenir une tension de sortie de celui-ci vers la ligne d'alimentation connectée au réseau (11) à une valeur cible prédéterminée lors de la réception du signal de détection de défaillance et les autres convertisseurs de puissance sont conçus chacun pour effectuer un contrôle du courant de façon à détecter une tension de la ligne d'alimentation connectée au réseau (11) afin d'ajuster un courant de sortie de celle-ci sur la base d'une tension détectée.

6. Système d'alimentation électrique selon l'une des revendications 1 à 4, dans lequel
les premier au troisième convertisseurs de puissance (3, 5, 7) sont chacun conçus pour commuter entre un fonctionnement connecté au réseau afin d'alimenter en puissance électrique la charge (9) par l'intermédiaire de la ligne d'alimentation connectée au réseau (11) et un fonctionnement indépendant du réseau afin d'alimenter en puissance électrique la charge (9) par l'intermédiaire d'une ligne d'alimentation indépendante du réseau (12) déconnectée du réseau électrique (8), et
un des premier au troisième convertisseurs de puissance (3, 5, 7) est conçu pour effectuer, dans le fonctionnement indépendant du réseau, un contrôle de tension constante de façon à maintenir une tension de sortie de celui-ci vers la ligne d'alimentation indépendante du réseau (12) à une valeur cible prédéterminée et les autres convertisseurs de puissance sont chacun conçus pour effectuer, dans le fonctionnement indépendant du réseau, un contrôle du courant de façon à détecter une tension de la ligne d'alimentation indépendante du réseau (12) afin d'ajuster un courant de sortie de celle-ci sur la base d'une tension détectée.

7. Système d'alimentation électrique selon l'une des revendications 1 à 4, dans lequel
un des premier au troisième convertisseurs de puissance (3, 5, 7) est conçu pour commuter entre un fonctionnement connecté au réseau pour alimenter en puissance électrique la charge (9) par l'intermédiaire de la ligne d'alimentation connectée au réseau (11) et un fonctionnement indépendant du réseau pour alimenter en puissance électrique la charge (9) par l'intermédiaire d'une ligne d'alimentation indépendante du réseau (12) déconnectée du réseau électrique (8), et les autres convertisseurs de puissance sont chacun connectés à la ligne d'alimentation connectée au réseau (11) et à la ligne d'alimentation indépendante du réseau (12) par l'intermédiaire d'un sélecteur externe (17, 18) conçu pour commuter la destination de la connexion d'un convertisseur correspondant entre la ligne d'alimentation connectée au réseau (11) et la ligne d'alimentation indépendante du réseau (12),
ledit un des premier au troisième convertisseurs de puissance (3, 5, 7) est conçu pour effectuer, dans le fonctionnement indépendant du réseau, un contrôle de tension constante de façon à maintenir une tension de sortie de celui-ci vers la ligne d'alimentation indépendante du réseau (12) à une valeur cible prédéterminée et pour commuter le sélecteur externe (17, 18) vers le côté de la ligne d'alimentation indépendante du réseau (12), et les autres convertisseurs de puissance sont chacun conçus pour effectuer un contrôle de courant de façon à détecter une tension de la ligne d'alimentation indépendante du réseau (12) afin d'ajuster un courant de sortie de celle-ci sur la base d'une tension détectée.

8. Système d'alimentation électrique selon l'une des revendications 1 à 4, dans lequel
l'au moins une charge (9) comprend deux charges (91 à 93) ou plus, et
des disjoncteurs de charges (113) qui sont disposés le long des lignes d'alimentation respectives des charges (91 à 93) ;
une mémoire conçue pour stocker des ordres de priorité des charges (91 à 93) ; et
un sélecteur de charge (112) conçu pour désactiver sélectivement les disjoncteurs de charges (113) en fonction de la puissance introduite dans les charges (91 à 93) de façon à ce qu'un disjoncteur de charge (113) correspondant à une charge (91) avec une priorité plus faible soit désactivée de préférence.
